# EUROPEAN PATENT APPLICATION

(11) **EP 1 415 713 A1**
(43) Date of publication of application: **06.05.2004**
(21) Application number: 02743881.1
(22) Date of filing: 09.07.2002
(51) Int. Cl.: B01J 35/02, C09D 5/16, C09D 7/12

(54) **COATING MATERIAL, PAINT, AND PROCESS FOR PRODUCING COATING MATERIAL**

(30) Priority: 10.07.2001 JP 2001210019; 10.07.2001 JP 2001210022
(71) Applicant: Nagae, Yoshiyuki, Kani-shi, Gifu 509-0204 (JP)
(72) Inventor: Nagae, Yoshiyuki, Kani-shi, Gifu 509-0204 (JP)
(74) Representative: Wiebusch, Manfred
(86) International application number: PCT/JP2002/006953
(87) International publication number: WO 2003/006159

(57) **Abstract**

It is an object to provide a coating agent and a paint, which enable sufficient exhibition of the capability of a photocatalyst such as the capability to decompose an organic substance or the like; particularly, sufficient exhibition of the capability on a thin coating film.

A coating agent of the present invention is manufactured as follows. Specifically, after photo-semiconductor powder has been dispersed in water, colloids such as a fluorine emulsion or the like are mixed into the aqueous dispersion. The particle size of the particles in the colloids is one time or more the particle size of the photo-semiconductor powder in the photo-semiconductor powder, and the photo-semiconductor particles assume a weight ratio of 0.1 to 10% in the entire coating agent. The photo-semiconductor particles are caused to be adsorbed on the surface of the colloidal particle within the range of one to five layers. Further, a porous sol solution may also be added to the coating agent. Alternatively, powder formed by coating photo-semiconductor powder with an adsorptive function substance may be employed in place of the photo-semiconductor powder.

## Description

### Technical Field

The present invention relates to a coating agent and paint, and more particularly, to a technique for enhancing a photocatalyst function and rendering the photocatalyst function efficient.

### Background Art

There has hitherto been proposed a technique for imparting a photocatalyst function to the surface of a building material or structure by causing a coating agent or paint to contain a photocatalyst so as to form a coating film on the building material or structure. Specifically, the technique is to cause the surface of a building material or structure covered with a coating film containing a photocatalyst to make full use of a photocatalyst function resulting from exposure of a photocatalyst to light; that is, sterilization, deodorization, and purification functions derived from decomposition of an organic substance through an oxidation-reduction action of a photocatalyst.

Here, a related-art coating agent or paint having a photocatalyst function is formed by dispersing a photocatalyst, such as a photo-semiconductor, and colloidal particles. There is a necessity for causing a thin coating film to sufficiently exhibit an ability of the photocatalyst to decompose organic substances. For this reason, the concentration of a photocatalyst, such as a photo-semiconductor, is set to a comparatively high level (e.g., 20% or higher). Even when the photocatalyst has a high concentration, an additive, such as a thickener or a film thickener, is charged into the photocatalyst in order to maintain a colloidal state and impart the features of a coating agent or paint to the photocatalyst.

Moreover, there has already been proposed a technique for coating the surface of the photocatalyst with calcium phosphate, such as apatite, to thus form a photocatalytic composite and render harmful matters easy to adsorb, whereby the apatite acts as a spacer to prevent the photocatalyst from coming into direct contact with a base material, thereby preventing decomposition and deterioration of the base material (JP-A-10-244166). Particularly, the technique yields an effect of combining the adsorption capability of calcium phosphate with the decomposition capability of the photocatalyst. More specifically, the photocatalyst decomposes bacteria or organic substances adsorbed by calcium phosphate, so that saturation of an adsorptive surface of calcium phosphate, which would otherwise be caused by adsorbed substances, can be preferably prevented. Therefore, there can be yielded a unique effect of the ability to prevent deterioration of the adsorption capability of calcium phosphate.

However, when a large amount of an additive, such as a thickener, is charged into the photocatalyst, the photocatalyst is concealed by the additives, thereby presenting a problem of a failure to sufficiently irradiate the photocatalyst with light. For this reason, the photocatalyst fails to sufficiently exhibit the capability of a photocatalyst. Even when a large quantity of photocatalyst is charged into the coating agent or the paint, a thin coating film cannot exhibit a sufficient photocatalyst function.

As mentioned above, the related-art coating agent or paint having a photocatalyst function encounters difficulty in forming a coating film which enables full use of the capability of a photocatalyst, such as a capability to decompose organic substances.

For this reason, the invention aims at providing a coating agent or paint which enables full exhibition of the capability of a photocatalyst, such as action of decomposing organic substances; particularly, enables even a thin coating film to fully exhibit the capability.

### Summary of the Invention

The present invention has been conceived to solve the foregoing drawbacks. First, a coating agent is characterized by comprising colloidal particles; and photo-semiconductor particles.

The coating agent of first configuration comprises colloidal particles and photo-semiconductor particles. Basically, the photo-semiconductor particles remain adsorbed on the surface of the colloidal particle. Hence, the photo-semiconductor particles can be efficiently exposed to light on the surface of the colloidal particle, thereby stably exhibiting a photocatalytic function. Moreover, the photo-semiconductor particles can be wholly exposed to light on the surface of the colloidal particle. Hence, the photo-semiconductor particles do not mutually interfere upon exposure, which would otherwise be caused when the photo-semiconductor particles are dispersed. Therefore, efficiency can be enhanced considerably. Accordingly, the capability of the photocatalyst; that is, the capability to decompose an organic substance or the like, can be sufficiently exhibited. The coating agent of the first configuration may also be embodied as follows; namely, "a coating agent characterized in that colloidal particles and photo-semiconductor particles are dispersed in water."

Second, the first configuration is characterized in that the colloidal particles have a particle size which is one time or more the particle size of the photo-semiconductor particle. In the coating agent of the second configuration, the colloidal particles are one time or more the size of the photo-semiconductor particle. Hence, a plurality of the photo-semiconductor particles or the like can be adsorbed on the surface of the colloidal particle. Therefore, the surface area where the photo-semiconductor particles are adsorbed can be made very large. Hence, the capability of the photocatalyst, such as the capability to decompose an organic substance or the like, can be sufficiently exhibited. Here, the colloidal particle may also be set so as to become 1 to 1000 times the size of the photo-semiconductor particles.

Third, the first or second configuration is characterized in that the content of the photo-semiconductor particles in the entire coating agent is set to a weight ratio of 0.1% to 10%. Specifically, the content of the photo-semiconductor particles in the entire coating agent is set to a weight ratio of 0.1% to 10%. In the coating agent of the third configuration, the content of the photo-semiconductor particles in the entire coating agent is set to a weight ratio of 0.1% to 10%, andtherefore the content of the photo-semiconductor particles is suppressed to a low level. For this reason, there is no necessity for charging large amounts of additives such as thickeners for maintaining a colloidal state. Hence, concealment of the photo-semiconductor particles by the additives can be prevented. Consequently, the photo-semiconductor particles are sufficiently exposed to light, and hence the photo-semiconductor particles can sufficiently exhibit a photocatalytic function. Hence, even a thin coating film can sufficiently exhibit the capability of the photocatalyst, such as the capability to decompose an organic substance or the like.

Fourth, any one of the first through third configurations is characterized in that the photo-semiconductor particles are adsorbed on the surface of the colloidal particle within the range of one to five layers. As a result of the photo-semiconductor particles being stacked into one to five layers, the photocatalytic function of the photo-semiconductor particle can be exhibited sufficiently. Concurrently, the layers can attain the function of a coating agent or paint while maintaining the colloidal state without involvement of a charge of additives or the like.

Fifth, a coating agent is characterized by comprising colloidal particles; and coated photo-semiconductor particles formed by coating photo-semiconductor particles with an adsorptive function substance.

The coating agent of the fifth configuration has colloidal particles and the coated photo-semiconductor particles. Basically, the coated photo-semiconductor particles remain adsorbed on the surface of the colloidal particle. Hence, the coated photo-semiconductor particles can be efficiently exposed to light on the surface of the colloidal particle, thereby stably exhibiting a photocatalytic function. Moreover, the coated photo-semiconductor particles can be wholly exposed to light on the surface of the colloidal particle. Hence, the coated photo-semiconductor particles do not mutually interfere upon exposure, which would otherwise be caused when the coated photo-semiconductor particles are dispersed. Therefore, efficiency can be considerably enhanced. Accordingly, the capability of the photocatalyst; that is, the capability to decompose an organic substance or the like, can be sufficiently exhibited. Further, the photo-semiconductor particles are coated with the adsorptive function substance, and hence the capability to adsorb a harmful substance can be improved. Presence of the adsorptive function substance hinders the photo-semiconductor particles from coming into direct contact with other particles of a base material or the like, thereby preventing decomposition of a binder or a base material by means of catalytic function of the photo-semiconductor. Specifically, there can be prevented decomposition of a binder which severs as a primer or decomposition of the binder or the like, which would otherwise be caused when the binder is mixed in the coating agent. In addition, the coating agent can be applied directly on fibers or plastic. The coating agent of the fifth configurationmay also be embodied as follows; namely, "a coating agent characterized in that colloidal particles and coated photo-semiconductor particles-which are formed by coating photo-semiconductor particles with an adsorptive function substance-are dispersed in water."

Sixth, the fifth configuration is characterized in that the content of the coated photo-semiconductor particles in the entire coating agent is set to a weight ratio of 0.1 to 10%. Specifically, the content of the coated photo-semiconductor particles in the entire coating agent is set to a weight ratio of 0.1 to 10%. In the coating agent of the sixth configuration, the content of the coated photo-semiconductor particles in the entire coating agent is set to a weight ratio of 0.1 to 10%. Hence, the content of the coated photo-semiconductor particles is suppressed to a low level. For this reason, there is no necessity for charging large amounts of additives such as thickeners for maintaining a colloidal state. Hence, concealment of the photo-semiconductor particles by the additives can be prevented. Consequently, the photo-semiconductor particles are sufficiently exposed to light, and hence the photo-semiconductor particles can sufficiently exhibit a photocatalytic function. Hence, even a thin coating film can sufficiently exhibit the capability of the photocatalyst, such as the capability to decompose an organic substance or the like.

Seventh, a coating agent is characterized by comprising colloidal particles; coated photo-semiconductor particles formed by coating photo-semiconductor particles with an adsorptive function substance; and photo-semiconductor particles.

The coating agent of the seventh configuration comprises the colloidal particles and the coated photo-semiconductor particles. Basically, the coated photo-semiconductor particles and the photo-semiconductor particles remain adsorbed on the surface of the colloidal particle. Hence, the coated photo-semiconductor particles and the photo-semiconductor particles can be efficiently exposed to light on the surface of the colloidal particle, thereby stably exhibiting a photocatalytic function. Moreover, the coated photo-semiconductor particles and the photo-semiconductor particles can be wholly exposed to light on the surface of the colloidal particle. Hence, the coated photo-semiconductor particles do not mutually interfere upon exposure, which would otherwise be caused when the coated photo-semiconductor particles and the photo-semiconductor particles are dispersed. Therefore, efficiency can be considerably enhanced. Accordingly, the capability of the photocatalyst; that is, the capability to decompose an organic substance or the like, can be sufficiently exhibited. Further, the photo-semiconductor particles are coated with the adsorptive function substance, and hence the capability to adsorb a harmful substance can be improved. Further, the coating agent includes the uncoated photo-semiconductor particles as well as the coated photo-semiconductor particles, and hence a sufficient photocatalytic effect can be obtained. The coating agent of the seventh configurationmay also be embodied as follows: namely, "a coating agent characterized in that colloidal particles, coated photo-semiconductor particles-which are formed by coating photo-semiconductor particles with an adsorptive function substance-and photo-semiconductor particles are dispersed in water."

Eighth, the seventh configuration is characterized in that the colloidal particles have a particle size which is one time or more the particle size of the photo-semiconductor particle. Therefore, since the colloidal particles are one time or more the size of the photo-semiconductor particle, a large number of photo-semiconductor particles can be adsorbed on the surface of the colloidal particle. Accordingly, the surface area where photo-semiconductor particles are adsorbed can be made very large. Hence, the capability of the photocatalyst, such as the capability to decompose an organic substance or the like, can be sufficiently exhibited. Here, the colloidal particle may also be set so as to become 1 to 1000 times as large as the photo-semiconductor particles.

Ninth, the seventh or eighth configuration is characterized in that the content of the photo-semiconductor particles in the entire coating agent is set to a weight ratio of 0.1 to 10%. Specifically, the content of the photo-semiconductor particles in the entire coating agent is set to a weight ratio of 0.1 to 10%. Therefore, the content of thephoto-semiconductorparticles in the entire coating agent is set to a weight ratio of 0.1 to 10%. Hence, the content of the photo-semiconductor particles is suppressed to a low level. For this reason, there is no necessity for charging large amounts of additives such as thickeners for maintaining a colloidal state. Hence, concealment of the photo-semiconductor particles by the additives can be prevented. Consequently, the photo-semiconductor particles are sufficiently exposed to light, and hence the photo-semiconductor particles can sufficiently exhibit a photocatalytic function. Hence, even a thin coating film can sufficiently exhibit the capability of the photocatalyst, such as the capability to decompose an organic substance or the like.

Tenth, any one of the fifth through ninth configurations is characterized in that the adsorptive function substance is porous calcium phosphate.

Eleventh, the tenth configuration is characterized in that the porous calcium phosphate is at least a kind of calcium phosphate selected from the group consisting of apatite hydroxide, apatite carbonate, and apatite fluoride.

Twelfth, the tenth or eleventh configuration is characterized in that the porous calcium phosphate covering the photo-semiconductor particles is embodied by means of immersing photo-semiconductor particles in a pseudo body fluid to coat the surface of the photo-semiconductor particles with porous calcium phosphate.

Thirteenth, any one of the fifth through twelfth configurations is characterized in that the colloidal particles are one time or more the size of the coated photo-semiconductor particles. In the coating agent of the thirteenth configuration, the colloidal particles are one time or more the size of the coated photo-semiconductor particle, and hence a large number of coated photo-semiconductor particles can be adsorbed on the surface of the colloidal particle. Accordingly, the surface area in which the coated photo-semiconductor particles are adsorbed can be made very large. Hence, the capability of the photocatalyst, such as the capability to decompose an organic substance or the like, can be sufficiently exhibited. Here, the colloidal particle may also be set so as to become 1 to 1000 times as large as the coated photo-semiconductor particles.

Fourteenth, any one of the fifth to thirteenth configurations is characterized in that the coated photo-semiconductor particles are adsorbed on the surface of the colloidal particle within the range from one to five layers. As a result of the coated photo-semiconductor particles being stacked in one to five layers, the photocatalytic function of the photo-semiconductor particle can be exhibited sufficiently. Concurrently, the layers can attain a function of a coating agent or paint while maintaining the colloidal state without involvement of a charge of additives or the like.

Fifteenth, any one of the first through fourteenth configurations is characterized in that the colloidal particles contained in the coating agent have different particle sizes. In short, the colloidal particles are formed from colloidal particles having different particle sizes. The coating agent of the fifteenth configuration contains a plurality of kinds of colloidal particles of different mean particle sizes. As a result, colloidal particles having smaller diameters burrow their way into interstices located around colloidal particles having larger diameters, thereby bridging spaces to enhance density of the coating agent. Therefore, the photocatalytic function can be enhanced, thereby increasing a concealing characteristic. As a result, transmission of UV rays through a coating surface can be inhibited, thereby enabling an attempt to enhance protective function of the coating material.

Sixteenth, any one of the first through fifteenth configurations is characterized in that the colloidal particles include at least one of fluorine emulsion particles, acrylic emulsion particles, acrylic silicon emulsion particles, and acrylic urethane emulsion particles.

Seventeenth, a coating agent is characterized by comprising first colloidal particles; photo-semiconductor particles having a particle size equal to or smaller than the particle size of the first colloidal particles; and second colloidal particles which are colloidal particles having a particle size equal to or smaller than the particle size of the first colloidal particles.

The coating agent of the seventeenth configuration comprises first colloidal particles and photo-semiconductor particles. Basically, the photo-semiconductor particles remain adsorbed on the surface of the first colloidal particle. Hence, the photo-semiconductor particles can be efficiently exposed to light on the surface of the first colloidal particle, thereby stably exhibiting a photocatalytic function. Moreover, the photo-semiconductor particles can be wholly exposed to light on the surface of the first colloidal particle. Hence, the photo-semiconductor particles do not mutually interfere upon exposure, which would otherwise be caused when the photo-semiconductor particles are dispersed. Therefore, efficiency can be considerably enhanced. Accordingly, the capability of the photocatalyst; that is, the capability to decompose an organic substance or the like, can be sufficiently exhibited. The coating agent has the second colloidal particles. Hence, the second colloidal particles remain additionally adsorbed on the surface of the first colloidal particle. Therefore, the coating agent also has the function of the second colloidal particle, thereby enabling an attempt to make the coating agent multifunctional. Here, the first colloidal particle may also be set so as to become 1 to 1000 times as large as the photo-semiconductor particles. Moreover, the first colloidal particle may also be set so as to become 1 to 1000 times as large as the second colloidal particles. The seventeenth configuration is described as having "the photo-semiconductor particles which are equal in particle size to or smaller than the first colloidal particles" but may also be described as having "the photo-semiconductor particles which are smaller in particle size than the first colloidal particles." Moreover, the seventeenth configuration is described as having "the second colloidal particles which are colloidal particles that are as large as or smaller than the first colloidal particles" but may also be described as having "the second colloidal particles which are colloidal particles that are smaller than the first colloidal particles." Further, the coating agent of the seventeenth configuration may be described as follows: specifically, "a coating agent is characterized by comprising first colloidal particles; photo-semiconductor particles that are smaller than the first colloidal particles; and second colloidal particles which are smaller than the first colloidal particles." Alternatively, the coating agent of the seventeenth configuration may be described as follows:

specifically, "a coating agent is characterized in that dispersed in water are a first colloidal particles, photo-semiconductor particles which are the same size as or smaller than the first colloidal particles, and second colloidal particles which are the same size as or smaller than the first colloidal particles."

Eighteenth, the seventeenth configuration is characterized in that the second colloidal particles are porous colloidal particles.

Nineteenth, the eighteenth configuration is characterized in that the porous colloidal particles are porous sol particles.

According to the coating agents of the eighteenth and nineteenth configurations, the coating agent provides an adhesive function when the coating agent is applied over the coating surface and also provide a function for promoting adhesion between the first colloidal particles and the photo-semiconductor particles.

Twentieth, any one of the seventeenth to nineteenth configurations is characterized in that the content of the photo-semiconductor particles in the entire coating agent is set to a weight ratio of 0.1 to 10%. Specifically, the content of thephoto-semiconductorparticles in the entire coating agent is set to a weight ratio of 0.1 to 10%. In the coating agent of the twentieth configuration, the content of the photo-semiconductor particles in the entire coating agent is set to a weight ratio of 0.1 to 10%. Hence, the content of the photo-semiconductor particles is suppressed to a low level. For this reason, there is no necessity for charging large amounts of additives such as thickeners for maintaining a colloidal state. Hence, concealment of the photo-semiconductor particles by the additives can be prevented. Consequently, the photo-semiconductor particles are sufficiently exposed to light, and hence the photo-semiconductor particles can sufficiently exhibit a photocatalytic function. Hence, even a thin coating film can sufficiently exhibit the capability of the photocatalyst, such as the capability to decompose an organic substance or the like.

Twenty-first, any one of the seventeenth to twentieth configurations is characterized in that the second colloidal particle is 1 to 1.5 times as large as the photo-semiconductor particle. In the coating agent of the twenty-first configuration, the second colloidal particle is 1 to 1.5 times as large as the photo-semiconductor particle. Hence, the particle size of the photo-semiconductor particles becomes equal to or analogous to that of the second colloidal particles. Therefore, the function of the photo-semiconductor and that of the porous colloids canbe exhibited in a well-balanced manner. The second colloid particles can also be considered to be 0.5 to 1.5 times as large as the photo-semiconductor particles.

Twenty-second, any one of the seventeenth to twenty-first configurations is characterized in that a layer formed from the photo-semiconductor particles and the second colloidal particles, the number of the layers to be stacked ranging from 1 to 5 layers, is adsorbed on the surface of the first colloidal particle. As a result of the photo-semiconductor particles being stacked in one to five layers, the photocatalytic function of the photo-semiconductor particle can be exhibited sufficiently. Concurrently, the layers can attain the function of a coating agent or paint while maintaining the colloidal state without involvement of a charge of additives or the like.

Twenty-third, a coating agent is characterized by comprising first colloidal particles; coated photo-semiconductor particles which are the same size as or smaller than the first colloidal particles and being embodied by coating photo-semiconductor particles with an adsorptive function substance; and second colloidal particles which are colloidal particles having a particle size equal to or smaller than the particle size of the first colloidal particle.

The coating agent of the twenty-third configuration comprises first colloidal particles and coated photo-semiconductor particles. Basically, the coated photo-semiconductor particles remain adsorbed on the surface of the first colloidal particle. Hence, the coated photo-semiconductor particles can be efficiently exposed to light on the surface of the first colloidal particle, thereby stably exhibiting a photocatalytic function. Moreover, the coated photo-semiconductor particles can be wholly exposed to light on the surface of the first colloidal particle. Hence, the coated photo-semiconductor particles do not mutually interfere upon exposure, which would otherwise be caused when the coated photo-semiconductor particles are dispersed. Therefore, efficiency can be considerably enhanced. Accordingly, the capability of the photocatalyst; that is, the capability to decompose an organic substance or the like, can be sufficiently exhibited. The coating agent has the second colloidal particles. Hence, the second colloidal particles remain additionally adsorbed on the surface of the first colloidal particle. Therefore, the coating agent also has the function of the second colloidal particle, thereby enabling an attempt to render the coating agent multifunctional. The coated photo-semiconductor particles are coated with an adsorptive function substance, and therefore the capability to adsorb a harmful substance can be enhanced. Moreover, the adsorptive function substance prevents the photo-semiconductor particles from coming into direct contact with other particles or the like. Hence, there can be prevented decomposition of a binder, a base material, or the like, which would otherwise be caused by the catalytic function of the photo-semiconductor. Here, the first colloidal particle may also be set so as to become 1 to 1000 times as large as the coatedphoto-semiconductor particles. Moreover, the first colloidal particle may also be set so as to become 1 to 1000 times as large as the second colloidal particles. The twenty-third configuration is described as "the coated photo-semiconductor particles which are as large as or smaller than the first colloidal particles" but may also be described as "the coated photo-semiconductor particles which are smaller in particle size than the first colloidal particles." Moreover, the twenty-third configuration is described as having "the second colloidal particles which are colloidal particles the same size as or smaller than the first colloidal particles" but may also be described as "the second colloidal particles which are colloidal particles that are smaller than the first colloidal particles." Further, the coating agent of the twenty-third configuration may be described as follows: specifically, "a coating agent is characterized by comprising first colloidal particles; coated photo-semiconductor particles which are smaller than the first colloidal particles and are formed by coating the photo-semiconductor particles with an adsorptive function substance; and second colloidal particles which are colloidal particles smaller than the first colloidal particles." Alternatively, the coating agent of the twenty-third configuration may be described as follows: specifically, "a coating agent is characterized in that dispersed in water are first colloidal particles, coated photo-semiconductor particles which are the same size as or smaller than the first colloidal particles and are formed by coating photo-semiconductor particles with an adsorptive function substance, and second colloidal particles which are colloidal particles the same size as or smaller than the first colloidal particles."

Twenty-fourth, the twenty-third configuration is characterized in that the content of the coated photo-semiconductor particles in the entire coating agent is set to a weight ratio of 0.1 to 10%. Specifically, the content of the coated photo-semiconductor particles in the entire coating agent is set to a weight ratio of 0.1 to 10%. In the coating agent of the twenty-fourth configuration, the content of the coated photo-semiconductor particles in the entire coating agent is set to a weight ratio of 0.1 to 10%. Hence, the content of the coated photo-semiconductor particles is suppressed to a low level. For this reason, there is no necessity for charging large amounts of additives such as thickeners for maintaining a colloidal state. Hence, concealment of the photo-semiconductor particles by the additives can be prevented. Consequently, the photo-semiconductor particles are sufficiently exposed to light, and hence the photo-semiconductor particles can sufficiently exhibit a photocatalytic function. Hence, even a thin coating film can sufficiently exhibit the capability of the photocatalyst, such as the capability to decompose an organic substance or the like.

Twenty-fifth, the twenty-third or twenty-fourth configuration is characterized in that the second colloidal particle is 1 to 1.5 times the size of the coated photo-semiconductor particle. In the coating agent of the twenty-fifth configuration, the second colloidal particle is 1 to 1.5 times the size of the coated photo-semiconductor particle. Hence, the particle size of the coated photo-semiconductor particles becomes equal to or analogous to that of the second colloidal particles. Therefore, the function of the photo-semiconductor and that of the porous colloids can be exhibited in a well-balanced manner. The second colloid particles can also be considered to be 0.5 to 1.5 times the size of the coated photo-semiconductor particles.

Twenty-sixth, any one of the twenty-third to twenty-fifth configurations is characterized in that a layer formed from the coated photo-semiconductor particles and the second colloidal particles, the number of the layers to be stacked ranging from 1 to 5 layers, is adsorbed on the surface of the first colloidal particle. As a result of the photo-semiconductor particles being stacked in one to five layers, the photocatalytic function of the photo-semiconductor particle can be exhibited sufficiently. Concurrently, the layers can attain the function of a coating agent or paint while maintaining the colloidal state without involvement of a charge of additives or the like.

Twenty-seventh, a coating agent is characterized by comprising first colloidal particles; coated photo-semiconductor particles having a particle size equal to or smaller than the particle size of the first colloidal particles and being embodied by coating photo-semiconductor particles with an adsorptive function substance; photo-semiconductor particles having a particle size equal to or smaller than the particle size of the first colloidal particle; and second colloidal particles which are colloidal particles having a particle size equal to or smaller than the particle size of the first colloidal particle.

The coating agent of the twenty-seventh configuration comprises first colloidal particles, coated photo-semiconductor particles, and photo-semiconductor particles. Basically, the coated photo-semiconductor particles and the photo-semiconductor particles remain adsorbed on the surface of the first colloidal particle. Hence, the coated photo-semiconductor particles can be efficiently exposed to light on the surface of the first colloidal particle, thereby stably exhibiting a photocatalytic function. Moreover, the coated photo-semiconductor particles and the photo-semiconductor particles can be wholly exposed to light on the surface of the first colloidal particle. Hence, the photo-semiconductor particles do not mutually interfere with exposure, which would otherwise be caused when the coated photo-semiconductor particles and the photo-semiconductor particles are dispersed. Therefore, efficiency can be considerably enhanced. Accordingly, the capability of the photocatalyst; that is, the capability to decompose an organic substance or the like, can be sufficiently exhibited. The coating agent has the second colloidal particles. Hence, the second colloidal particles remain additionally adsorbed on the surface of the first colloidal particle. Therefore, the coating agent also has the function of the second colloidal particle, thereby enabling an attempt to render the coating agent multifunctional. The coated photo-semiconductor particles are coated with an adsorptive function substance, and therefore the capability to adsorb a harmful substance can be enhanced. The coating agent also contains uncoated photo-semiconductor particles as well as the coated photo-semiconductor particles, and hence a sufficient photocatalytic effect can be acquired. Here, the first colloidal particle may also be set so as to become 1 to 1000 times the size of the coated photo-semiconductor particles. Moreover, the first colloidal particle may also be set so as to become 1 to 1000 times the size of the photo-semiconductor particles. The first colloidal particle may also be set so as to become 1 to 1000 times the size of the second colloidal particles. The twenty-seventh configuration is described as having "the coated photo-semiconductor particles which are the same size as or smaller than the first colloidal particles" but may also be described as having "the coated photo-semiconductor particles which are smaller in particle size than the first colloidal particles." Moreover, the twenty-seventh configuration is described as having "the photo-semiconductor particles which are the same size as or smaller than the first colloidal particles" but may also be described as having "the photo-semiconductor particles which are smaller in particle size than the first colloidal particles." The twenty-seventh configuration is described as having "the second colloidal particles which are the same size as or smaller than the first colloidal particles" but may also be described as having "the second colloidal particles which are smaller than the first colloidal particles." Further, the coating agent of the twenty-seventh configuration may be described as follows: specifically, "a coating agent is characterized in that dispersed in water are first colloidal particles, coated photo-semiconductor particles which are the same size as or smaller than the first colloidal particles and are formed by coating photo-semiconductor particles with an adsorptive function substance, photo-semiconductor particles that are the same size as or smaller than the first colloidal particles, and second colloidal particles which are the same size as or smaller than the first colloidal particles."

Twenty-eighth, the twenty-seventh configuration is characterized in that the total content of the coated photo-semiconductor particles and the photo-semiconductor particles in the entire coating agent is set to a weight ratio of 0.1 to 10%. In the coating agent of the twenty-eighth configuration, the total content of the coated photo-semiconductor particles and the photo-semiconductor particles in the entire coating agent is set to a weight ratio of 0.1 to 10%. Hence, the total content of the coated photo-semiconductor particles and the photo-semiconductor particles is suppressed to a low level. For this reason, there is no necessity for charging large amounts of additives such as thickeners for maintaining a colloidal state. Hence, concealment of the photo-semiconductor particles by the additives can be prevented. Consequently, the coated photo-semiconductor particles and the photo-semiconductor particles are sufficientlyexposed to light, andhence the coated photo-semiconductor particles and the photo-semiconductor particles can sufficiently exhibit a photocatalytic function. Hence, even a thin coating film can sufficiently exhibit the capability of the photocatalyst, such as the capability to decompose an organic substance or the like.

Twenty-ninth, the twenty-seventh or twenty-eighth configuration is characterized in that the second colloidal particle is 1 to 1.5 times the size of the coated photo-semiconductor particle and the photo-semiconductor particles. Hence, the particle size of the coated photo-semiconductor particles, that of the photo-semiconductor particles, and that of the second colloidal particles become equal to or analogous to each other. Therefore, the function of the photo-semiconductor and that of the porous colloids can be exhibited in a well-balanced manner. The second colloid particles can also be considered to be 0.5 to 1.5 times as large as the coated photo-semiconductor particles.

Thirtieth, any one of the twenty-seventh to twenty-ninth configurations is characterized in that a layer formed from the coated photo-semiconductor particles, the photo-semiconductor particles, and the second colloidal particles, the number of the layers to be stacked ranging from 1 to 5 layers, is adsorbed on the surface of the first colloidal particle. As a result of the photo-semiconductor particles being stacked in one to five layers, the photocatalytic function of the photo-semiconductor particle can be exhibited sufficiently. Concurrently, layers can attain the function of a coating agent or paint while maintaining the colloidal state without involvement of a charge of additives or the like.

Thirty-first, any one of the twenty-third to thirtieth configurations is characterized in that the adsorptive function substance is porous calcium phosphate.

Thirty-second, the thirty-first configuration is characterized in that the porous calcium phosphate is at least one kind of calcium phosphate selected from the group consisting of apatite hydroxide, apatite carbonate, and apatite fluoride.

Thirty-third, the thirty-first or thirty-second configuration is characterized in that the porous calcium phosphate covering the photo-semiconductor particles is embodied by means of immersing photo-semiconductor particles in a pseudo body fluid to coat the surface of the photo-semiconductor particles with porous calcium phosphate.

Thirty-fourth, the twenty-third or thirty-third configuration is characterized in that the second colloidal particles are porous colloidal particles.

Thirty-fifth, the thirty-fourth configuration is characterized in that the porous colloidal particles are porous sol particles. According to the coating agents of the thirty-fourth and thirty-fifth configurations, the coating agent provides an adhesive function when the coating agent is applied over the coating surface and also provides function for promoting adhesion between the first colloidal particles and the coated photo-semiconductor particles and adhesion between the first colloidal particles and the photo-semiconductor particles.

Thirty-sixth, any one of the twenty-third to thirty-fifth configurations is characterized in that the first colloidal particles are formed from colloidal particles having different particle sizes.

Thirty-seventh, any one of the twenty-third to thirty-sixth configurations is characterized in that the first colloidal particles include at least one of fluorine emulsion particles, acrylic emulsion particles, acrylic silicon emulsion particles, and acrylic urethane emulsion particles.

Thirty-eighth, a paint is characterized by comprising the coating agent defined in any one of the first through thirty-seventh configurations. Here, the thirty-eighth configuration may also be described as "a paint comprising the coating agent defined in any one of the first through thirty-seventh configurations, and pigment."

Thirty-ninth, a method for manufacturing a coating agent is characterized by comprising an aqueous dispersion manufacturing step for manufacturing an aqueous dispersion by dispersing photo-semiconductor particles in water; and a colloidal solution mixing/dispersing step for mixing and dispersing into the aqueous dispersion produced in the aqueous dispersion manufacturing step a colloidal solution having colloidal particles.

In the coating agent manufactured by the method of the thirty-ninth configuration, the photo-semiconductor particles basically remain adsorbed on the surface of the colloidal particle. Hence, the photo-semiconductor particles can be efficiently exposed to light on the surface of the colloidal particle, thereby stably exhibiting a photocatalytic function. Moreover, the photo-semiconductor particles can be wholly exposed to light on the surface of the colloidal particle. Hence, the photo-semiconductor particles do not mutually interfere upon exposure, which would otherwise be caused when the photo-semiconductor particles are dispersed. Therefore, efficiency can be considerably enhanced. Accordingly, the capability of the photocatalyst; that is, the capability to decompose an organic substance or the like, can be sufficiently exhibited.

Fortieth, a method for manufacturing a coating agent is characterized by comprising a colloidal solution dispersing step for dispersing in water a colloidal solution having colloidal particles, to thereby manufacture an aqueous dispersion; and a photo-semiconductor particle mixing/dispersing step for mixing and dispersing photo-semiconductor particles into the aqueous dispersion manufactured in the colloidal solution dispersing step.

In the coating agent manufactured by the method of the fortieth configuration, the photo-semiconductor particles basically remain adsorbed on the surface of the colloidal particle. Hence, the photo-semiconductor particles can be efficiently exposed to light on the surface of the colloidal particle, thereby stably exhibiting a photocatalytic function. Moreover, the photo-semiconductor particles can be wholly exposed to light on the surface of the colloidal particle. Hence, the photo-semiconductor particles do not mutually interfere upon exposure, which would otherwise be caused when the photo-semiconductor particles are dispersed. Therefore, efficiency can be considerably enhanced. Accordingly, the capability of the photocatalyst; that is, the capability to decompose an organic substance or the like, can be sufficiently exhibited.

Forty-first, the thirty-ninth or fortieth configuration is characterized in that the colloidal particles in the colloidal solution are one time ormore the size of the photo-semiconductor particle. In short, the colloidal particles in the colloidal solution are one time or more the size of the photo-semiconductor particle. Here, the colloidal particle in the colloidal solution may also be set so as to become 1 to 1000 times the size of the photo-semiconductor particles.

Forty-second, any one of the thirty-ninth to forty-first configurations is characterized in that the photo-semiconductor particles are dispersed such that the content of the photo-semiconductor particles in the entire coating agent assumes a weight ratio of 0.1 to 10%.

Forty-third, a method for manufacturing a coating agent is characterized by comprising an aqueous dispersion manufacturing step for manufacturing an aqueous dispersion by means of dispersing in water coated photo-semiconductor particles, the particles being formed by coating photo-semiconductor particles with an adsorptive function substance; and a colloidal solution mixing/dispersing step for mixing and dispersing a colloidal solution having colloidal particles into the aqueous dispersion produced in the aqueous dispersion manufacturing step.

In the coating agent manufactured by the method of the forty-third configuration, the coated photo-semiconductor particles basically remain adsorbed on the surface of the colloidal particle. Hence, the photo-semiconductor particles can be efficiently exposed to light on the surface of the colloidal particle, thereby stably exhibiting a photocatalytic function. Moreover, the photo-semiconductor particles can be wholly exposed to light on the surface of the colloidal particle. Hence, the photo-semiconductor particles do not mutually interfere upon exposure, which would otherwise be caused when the photo-semiconductor particles are dispersed. Therefore, efficiency can be considerably enhanced. Accordingly, the capability of the photocatalyst; that is, the capability to decompose an organic substance or the like, can be sufficiently exhibited. Further, the photo-semiconductor particles are coated with the adsorptive function substance, and hence the capability to adsorb a harmful substance can be improved. Presence of the adsorptive function substance hinders the photo-semiconductor particles from coming into direct contact with other particles of a base material or the like, and hence there can be prevented decomposition of a binder or a base material by means of a catalytic function of the photo-semiconductor.

In the forty-third configuration, photo-semiconductor particles as well as the coated photo-semiconductor particles may be decomposed during the aqueous dispersion manufacturing step. In this case, the colloidal particles in the colloidal solution are preferably set so as to be one time or more the size of the photo-semiconductor particle. Moreover, the total content of the coated photo-semiconductor particles and the photo-semiconductor particles in the entire coating agent is preferably caused to assume a weight ratio of 0.1 to 10%.

Forty-fourth, a method for manufacturing a coating agent is characterized by comprising a colloidal solution manufacturing step for dispersing in water a colloidal solution having colloidal particles, to thereby manufacture an aqueous dispersion; and a coated photo-semiconductor particle mixing/dispersing step for mixing and dispersing, in the aqueous dispersion manufactured in the colloidal solution dispersing step, coated photo-semiconductor particles formed by coating photo-semiconductor particles with an adsorptive function substance.

In the coating agent manufactured by the method of the forty-forth configuration, the coated photo-semiconductor particles basically remain adsorbed on the surface of the colloidal particle. Hence, the photo-semiconductor particles can be efficiently exposed to light on the surface of the colloidal particle, thereby stably exhibiting a photocatalytic function. Moreover, the photo-semiconductor particles can be wholly exposed to light on the surface of the colloidal particle. Hence, the photo-semiconductor particles do not mutually interfere upon exposure, which would otherwise be caused when the photo-semiconductor particles are dispersed. Therefore, efficiency can be considerably enhanced. Accordingly, the capability of the photocatalyst; that is, the capability to decompose an organic substance or the like, can be sufficiently exhibited. Further, the photo-semiconductor particles are coated with the adsorptive function substance, and hence the capability to adsorb a harmful substance can be improved. Presence of the adsorptive function substance hinders the photo-semiconductor particles from coming into direct contact with other particles of a base material or the like, and hence there can be prevented decomposition of a binder or a base material by means of a catalytic function of the photo-semiconductor.

In the forty-fourth configuration, photo-semiconductor particles as well as the coated photo-semiconductor particles may be decomposed during the coated photo-semiconductor particle manufacturing step. In this case, the colloidal particles in the colloidal solution are preferably set so as to be one time or more the size of the photo-semiconductor particle. Moreover, the total content of the coated photo-semiconductor particles and the photo-semiconductor particles in the entire coating agent is preferably caused to assume a weight ratio of 0.1 to 10%.

Forty-fifth, the forty-third or forty-fourth configuration is characterized in that the colloidal particles in the colloidal solution are one time or more the size of the coated photo-semiconductor particle. In short, the colloidal particles in the colloidal solution are one time or more the size of the coated photo-semiconductor particle. Here, the colloidal particle in the colloidal solution may also be set so as to become 1 to 1000 times as large as the coated photo-semiconductor particles.

Forty-sixth, the forty-third or forty-fifth configuration is characterized in that the coated photo-semiconductor particles are dispersed such that the content of the coated photo-semiconductor particles in the entire coating agent assumes a weight ratio of 0.1 to 10%. Specifically, the coated photo-semiconductor particles are. dispersed such that the content of the coated photo-semiconductor particles in the entire coating agent assumes a weight ratio of 0.1 to 10%.

Forty-seventh, any one of the forty-third to forty-sixth configurations is characterized in that the adsorptive function substance is porous calcium phosphate.

Forty-eighth, a method for manufacturing a coating agent is characterized in that there is manufactured a solution, in which photo-semiconductor particles or coated photo-semiconductor particles formed by coating photo-semiconductor particles with an adsorptive function substance and a colloidal solution having colloidal particles are dispersed in water.

In the coating agent manufactured by the method of the forty-eighth configuration, the coated photo-semiconductor particles basically remain adsorbed on the surface of the colloidal particle. Hence, the photo-semiconductor particles can be efficiently exposed to light on the surface of the colloidal particle, thereby stably exhibiting a photocatalytic function. Moreover, the photo-semiconductor particles can be wholly exposed to light on the surface of the colloidal particle. Hence, the photo-semiconductor particles do not mutually interfere upon exposure, which would otherwise be caused when the photo-semiconductor particles are dispersed. Therefore, efficiency can be considerably enhanced. Accordingly, the capability of the photocatalyst; that is, the capability to decompose an organic substance or the like, can be sufficiently exhibited. Further, the photo-semiconductor particles are coated with the adsorptive function substance, and hence the capability to adsorb a harmful substance can be improved. Presence of the adsorptive function substance hinders the photo-semiconductor particles from coming into direct contact with other particles of a base material or the like, and hence there can be prevented decomposition of a binder or a base material by means of a catalytic function of the photo-semiconductor.

Forty-ninth, any one of the thirty-ninth to forty-eighth configurations is characterized in that the colloidal particles include at least one of fluorine emulsion particles, acrylic emulsion particles, acrylic silicon emulsion particles, and acrylic urethane emulsion particles.

Fiftieth, a method for manufacturing a coating agent is characterized by comprising an aqueous dispersion manufacturing step for manufacturing an aqueous dispersion by dispersing photo-semiconductor particles in water; a first mixing/dispersing step for mixing and dispersing a first colloidal solution having colloidal particles into the aqueous dispersion produced in the aqueous dispersion manufacturing step, to thereby prepare an aqueous mixture; and a second mixing/dispersing step for mixing and dispersing a second colloidal solution having colloidal particles, the particles having a particle size equal to or larger than that of the colloidal particles of the first colloidal solution, into the aqueous mixture produced in the first mixing/dispersing step, thereby preparing a coating agent.

In the coating agent manufactured by the method of the fiftieth configuration, the photo-semiconductor particles basically remain adsorbed on the surface of the colloidal particle in the second colloidal solution. Hence, the photo-semiconductor particles can be efficiently exposed to light on the surface of the colloidal particle in the second colloidal solution, thereby stably exhibiting a photocatalytic function. Moreover, the photo-semiconductor particles can be wholly exposed to light on the surface of the colloidal particle in the second colloidal solution. Hence, the photo-semiconductor particles do not mutually interfere upon exposure, which would otherwise be caused when the photo-semiconductor particles are dispersed. Therefore, efficiency can be considerably enhanced. Accordingly, the capability of the photocatalyst; that is, the capability to decompose an organic substance or the like, can be sufficiently exhibited. The coating agent also has colloidal particles in the first colloidal solution. Hence, the colloidal particles in the first colloidal solution remain additionally adsorbed on the surface of the colloidal particle in the second colloidal solution. Therefore, the coating agent also has the function of the colloidal particle in the first colloidal solution, thereby enabling an attempt to render the coating agent multifunctional. The fiftieth configuration is described as having "a second mixing/dispersing step for mixing and dispersing a second colloidal solution having colloidal particles, the particles being one time or more the size of the colloidal particles of the first colloidal solution, into the aqueous mixture produced in the first mixing/dispersing step, to thereby prepare a coating agent" but may also be described as having "a second mixing/dispersing step for mixing and dispersing a second colloidal solution having colloidal particles, the particles being larger than the colloidal particles of the first colloidal solution, into the aqueous mixtureproduced in the firstmixing/dispersing step, to thereby prepare a coating agent." In short, the fiftieth configuration may also be described as "a method for manufacturing a coating agent is characterized by comprising an aqueous dispersion manufacturing step for manufacturing an aqueous dispersion by dispersing photo-semiconductor particles in water; a first mixing/dispersing step for mixing and dispersing a first colloidal solution having colloidal particles into the aqueous dispersion produced in the aqueous dispersion manufacturing step, to thereby prepare an aqueous mixture; and a second mixing/dispersing step for mixing and dispersing a second colloidal solution having colloidal particles, the particles having a particle size larger than that of the colloidal particles of the first colloidal solution, in the aqueous mixture produced in the first mixing/dispersing step, to therebyprepare a coating agent."

Fifty-first, a method for manufacturing a coating agent is characterized by comprising an aqueous dispersion manufacturing step for manufacturing an aqueous dispersion by dispersing photo-semiconductor particles in water; an aqueous mixture manufacturing step for manufacturing an aqueous mixture, wherein a first colloidal solution having colloidal particles and a second colloidal solution having colloidal particles, the particles having a particle size equal to or larger than that of the colloidal particles of the first colloidal solution, are dispersed into the aqueous dispersionproduced in the aqueous dispersion manufacturing step.

In the coating agent manufactured by the method of the fifty-first configuration, the photo-semiconductor particles basically remain adsorbed on the surface of the colloidal particle in the second colloidal solution. Hence, the photo-semiconductor particles can be efficiently exposed to light on the surface of the colloidal particle in the second colloidal solution, thereby stably exhibiting a photocatalytic function. Moreover, the photo-semiconductor particles can be wholly exposed to light on the surface of the colloidal particle in the second colloidal solution. Hence, the photo-semiconductor particles do not mutually interfere upon exposure, which would otherwise be caused when the photo-semiconductor particles are dispersed. Therefore, efficiency can be considerably enhanced. Accordingly, the capability of the photocatalyst; that is, the capability to decompose an organic substance or the like, can be sufficiently exhibited. The coating agent has colloidal particles in the first colloidal solution. Hence, the colloidal particles in the first colloidal solution remain additionally adsorbed on the surface of the colloidal particle in the second colloidal solution. Therefore, the coating agent also has the function of the colloidal particle in the first colloidal solution, thereby enabling an attempt to render the coating agent multifunctional.

Fifty-second, the fiftieth or fifty-first configuration is characterized in that the photo-semiconductor particles are dispersed such that the content of the photo-semiconductor particles in the entire coating agent assumes a weight ratio of 0.1 to 10%.

Fifty-third, a method for manufacturing a coating agent is characterized by comprising an aqueous dispersion manufacturing step for manufacturing an aqueous dispersion by means of dispersing in water photo-semiconductor particles and coated photo-semiconductor particles, the particles being formed by coating photo-semiconductor particles with an adsorptive function substance; a first mixing/dispersing step for mixing and dispersing a first colloidal solution having colloidal particles into the aqueous dispersion produced in the aqueous dispersion manufacturing step, to thereby prepare an aqueous mixture; and a second mixing/dispersing step for mixing and dispersing a second colloidal solution having colloidal particles, the particles having a particle size equal to or larger than that of the colloidal particles of the first colloidal solution, into the aqueous mixture produced in the first mixing/dispersing step.

In the coating agent manufactured by the method of the fifty-third configuration, the coated photo-semiconductor particles and the photo-semiconductor particles basically remain adsorbed on the surface of the colloidal particle in the second colloidal solution. Hence, the coated photo-semiconductor particles and the photo-semiconductor particles can be efficiently exposed to light on the surface of the colloidal particle in the second colloidal solution, thereby stably exhibiting a photocatalytic function. Moreover, the coated photo-semiconductor particles and the photo-semiconductor particles can be wholly exposed to light on the surface of the colloidal particle in the second colloidal solution. Hence, the photo-semiconductor particles do not mutually interfere upon exposure, which would otherwise be caused when the coated photo-semiconductor particles and the photo-semiconductor particles are dispersed. Therefore, efficiency can be considerably enhanced. Accordingly, the capability of the photocatalyst; that is, the capability to decompose an organic substance or the like, can be sufficiently exhibited. The coating agent has colloidal particles in the first colloidal particles. Hence, the colloidal particles in the first colloidal solution remain additionally adsorbed on the surface of the colloidal particle in the second colloidal solution. Therefore, the coating agent also has the function of the colloidal particle in the first colloidal solution, thereby enabling an attempt to render the coating agent multifunctional. Moreover, thephoto-semiconductorparticles are coated with an adsorptive function substance, and hence the capability to adsorb harmful substances can be improved. Uncoated photo-semiconductor particles as well as the coated photo-semiconductor particles are included, and hence a sufficient photocatalytic effect can be yielded.

The fifty-third configuration is described as comprising "a second mixing/dispersing step for mixing and dispersing a second colloidal solution having colloidal particles, the particles being one time or more the size of the colloidal particles of the first colloidal solution, into the aqueous mixture produced in the first mixing/dispersing step" but may also be described as including "a second mixing/dispersing step for mixing and dispersing a second colloidal solution having colloidal particles, the particles being larger than the colloidal particles of the first colloidal solution, into the aqueous mixture produced in the first mixing/dispersing step." In short, the fifty-third configuration may also be described as "a method for manufacturing a coating method comprises an aqueous dispersion manufacturing step for manufacturing an aqueous dispersion by means of dispersing in water photo-semiconductor particles and coated photo-semiconductor particles, the particles being formed by coating photo-semiconductor particles with an adsorptive function substance; a first mixing/dispersing step for mixing and dispersing a first colloidal solution having colloidal particles into the aqueous dispersion produced in the aqueous dispersion manufacturing step, to thereby prepare an aqueous mixture; and a second mixing/dispersing step for mixing and dispersing a second colloidal solution having colloidal particles, the particles being larger than the colloidal particles of the first colloidal solution, into the aqueous mixture produced in the first mixing/dispersing step.

Fifty-fourth, a method for manufacturing a coating agent is characterized by comprising an aqueous dispersion manufacturing step for manufacturing an aqueous dispersion by dispersing in water photo-semiconductor particles and coated semiconductor particles formed by coating photo-semiconductor particles with an adsorptive function substance; an aqueous mixture manufacturing step for manufacturing an aqueous mixture, in which a first colloidal solution having colloidal particles and a second colloidal solution having colloidal particles, the particles having a particle size equal to or larger than that of the colloidal particles of the first colloidal solution, are dispersed into the aqueous dispersion produced in the aqueous dispersion manufacturing step.

In the coating agent manufactured by the method of the fifty-fourth configuration, the coated photo-semiconductor particles and the photo-semiconductor particles basically remain adsorbed on the surface of the colloidal particle in the second colloidal solution. Hence, the coated photo-semiconductor particles and the photo-semiconductor particles can be efficiently exposed to light on the surface of the colloidal particle in the second colloidal solution, thereby stably exhibiting a photocatalytic function. Moreover, the coated photo-semiconductor particles and the photo-semiconductor particles can be wholly exposed to light on the surface of the colloidal particle in the second colloidal solution. Hence, the photo-semiconductor particles do not mutually interfere upon exposure, which would otherwise be caused when the coated photo-semiconductor particles and the photo-semiconductor particles are dispersed. Therefore, efficiency can be considerably enhanced. Accordingly, the capability of the photocatalyst; that is, the capability to decompose an organic substance or the like, can be sufficiently exhibited. The coating agent has colloidal particles in the first colloidal particles. Hence, the colloidal particles in the first colloidal solution remain additionally adsorbed on the surface of the colloidal particle in the second colloidal solution. Therefore, the coating agent also has the function of the colloidal particle in the first colloidal solution, thereby enabling an attempt to render the coating agent multifunctional. The coated photo-semiconductor particles are coated with an adsorptive function substance, and therefore the capability to adsorb a harmful substance can be enhanced. The coating agent also contains uncoated photo-semiconductor particles as well as the coated photo-semiconductor particles, and hence a sufficient photocatalytic effect can be acquired.

Fifty-fifth, the fifty-third or fifty-fourth configuration is characterized in that the coated photo-semiconductor particles and the photo-semiconductor particles are dispersed such that the total content of the coated photo-semiconductor particles and the photo-semiconductor particles in the entire coating agent assumes a weight ratio of 0.1 to 10%. Hence, the total content of the coated photo-semiconductor particles and the photo-semiconductor particles is suppressed to a low level. For this reason, there is no necessity for charging large amounts of additives such as thickeners for maintaining a colloidal state. Hence, concealment of the coated photo-semiconductor particles and the photo-semiconductor particles by the additives can be prevented. Consequently, the coated photo-semiconductor particles and the photo-semiconductor particles are sufficiently exposed to light, and hence the photo-semiconductor particles can sufficiently exhibit a photocatalytic function. Hence, even a thin coating film can sufficiently exhibit the capability of the photocatalyst, such as the capability to decompose an organic substance or the like.

Fifty-sixth, any one of the fiftieth to fifty-fifth configurations is characterized in that the colloidal particles in the second colloidal solution have a particle size which is one time or more the particle size of the photo-semiconductor particle.

Therefore, the colloidal particles in the second colloidal solution are one time or more the size of the photo-semiconductor particle, and hence a large number of photo-semiconductor particles can be adsorbed on the surface of the colloidal particle in the second colloidal solution. Accordingly, the surface area on which the photo-semiconductor particles are adsorbed can be made very large. Hence, the capability of the photocatalyst, such as the capability to decompose an organic substance or the like, can be sufficiently exhibited. Here, the colloidal particle in the second colloidal solution may also be set so as to become 1 to 1000 times as large as the photo-semiconductor particles.

Fifty-seventh, any one of the fiftieth to fifty-sixth configurations is characterized in that the colloidal particle in the first colloidal solution is 1 to 1.5 times as large as the photo-semiconductor particle. Hence, the particle size of the photo-semiconductor particles and that of the colloidal particles in the first colloidal solution become equal to or analogous to each other. Therefore, the function of the photo-semiconductor and that of the porous colloids can be exhibited in a well-balanced manner. The colloid particles in the first colloidal solution can also be considered to be 0.5 to 1.5 times as large as the photo-semiconductor particles.

Fifty-eighth, a method for manufacturing a coating agent is characterized by comprising: an aqueous dispersion manufacturing step for manufacturing an aqueous dispersion by dispersing in water coated photo-semiconductor particles formed by coating photo-semiconductor particles with an adsorptive function substance; a first mixing/dispersing step for mixing and dispersing a first colloidal solution having colloidal particles into the aqueous dispersion produced in the aqueous dispersion manufacturing step, to thereby prepare an aqueous mixture; and a second mixing/dispersing step for mixing and dispersing a second colloidal solution having colloidal particles, the particles being as large as or larger than the colloidal particles of the first colloidal solution, in the aqueous mixture produced in the first mixing/dispersing step, to thereby prepare a coating agent.

In the coating agent manufactured by the method of the fifty-eighth configuration, the coated photo-semiconductor particles basically remain adsorbed on the surface of the colloidal particle in the second colloidal solution. Hence, the coated photo-semiconductor particles can be efficiently exposed to light on the surface of the colloidal particle in the second colloidal solution, thereby stably exhibiting a photocatalytic function. Moreover, the coated photo-semiconductor particles can be wholly exposed to light on the surface of the colloidal particle in the second colloidal solution. Hence, the photo-semiconductor particles do not mutually interfere upon exposure, which would otherwise be caused when the coated photo-semiconductor particles are dispersed. Therefore, efficiency can be considerably enhanced. Accordingly, the capability of the photocatalyst; that is, the capability to decompose an organic substance or the like, can be sufficientlyexhibited. The coating agent also has colloidal particles in the first colloidal particles. Hence, the colloidal particles in the first colloidal solution remain additionally adsorbed on the surface of the colloidal particle in the second colloidal solution. Therefore, the coating agent also has the function of the colloidal particle in the first colloidal solution, thereby enabling an attempt to render the coating agent multifunctional. Further, the photo-semiconductor particles are coated with the adsorptive function substance, and hence the capability to adsorb a harmful substance can be improved. Presence of the adsorptive function substance hinders the photo-semiconductor particles from coming into direct contact with other particles of a base material or the like, and hence there can be prevented decomposition of a binder or a base material by means of catalytic function of the photo-semiconductor.

Thefifty-eighth configurationisdescribed ascomprising "a second mixing/dispersing step for mixing and dispersing a second colloidal solution having colloidal particles, the particles being one time or more the size of the colloidal particles of the first colloidal solution, into the aqueous mixture produced in the first mixing/dispersing step, to thereby prepare a coating agent" but may also be described as comprising "a second mixing/dispersing step for mixing and dispersing a second colloidal solution having colloidal particles, the particles being larger than the colloidal particles of the first colloidal solution, into the aqueous mixture produced in the first mixing/dispersing step, to thereby prepare a coating agent."

Fifty-ninth, a method for manufacturing a coating agent is characterized by comprising an aqueous dispersion manufacturing step for manufacturing an aqueous dispersion by dispersing in water coated semiconductor particles formed by coating photo-semiconductor particles with an adsorptive function substance; an aqueous mixture manufacturing step for manufacturing an aqueous mixture, in which a first colloidal solution having colloidal particles and a second colloidal solution having colloidal particles, theparticles of the second colloidal solutionbeing as large as or larger than the colloidal particles of the first colloidal solution, are dispersed in the aqueous dispersion produced in the aqueous dispersion manufacturing step.

In the coating agent manufactured by the method of the fifty-ninth configuration, the coated photo-semiconductor particles basically remain adsorbed on the surface of the colloidal particle in the second colloidal solution. Hence, the coated photo-semiconductor particles can be efficiently exposed to light on the surface of the colloidal particle in the second colloidal solution, thereby stably exhibiting a photocatalytic function. Moreover, the coated photo-semiconductor particles can be wholly exposed to light on the surface of the colloidal particle in the second colloidal solution. Hence, the photo-semiconductor particles do not mutually interfere upon exposure, which would otherwise be caused when the coated photo-semiconductor particles are dispersed. Therefore, efficiency can be considerably enhanced. Accordingly, the capability of the photocatalyst; that is, the capability to decompose an organic substance or the like, can be sufficiently exhibited. The coating agent also has colloidal particlesin thefirst colloidalsolution. Hence, the colloidal particles in the first colloidal solution remain additionally adsorbed on the surface of the colloidal particle in the second colloidal solution. Therefore, the coating agent also has the function of the colloidal particle in the first colloidal solution, thereby enabling an attempt to render the coating agent multifunctional. Further, the photo-semiconductor particles are coated with the adsorptive function substance, and hence the capability to adsorb a harmful substance can be improved. Presence of the adsorptive function substance hinders the photo-semiconductor particles from coming into direct contact with other particles of a base material or the like, and hence there can be prevented decomposition of a binder or a base material by means of catalytic function of the photo-semiconductor.

Sixtieth, the fifty-eighth or fifty-ninth configuration is characterized in that the coated photo-semiconductor particles are dispersed in the aqueous dispersion manufacturing step such that the content of the coated photo-semiconductor particles in the entire coating agent assumes a weight ratio of 0.1 to 10%. Specifically, the coated photo-semiconductor particles are dispersed in the aqueous dispersion manufacturing step in such a way that the content of the coated photo-semiconductor particles in the entire coating agent assumes a weight ratio of 0.1 to 10%. Hence, the content of the coated photo-semiconductor particles is suppressed to a low level. Forthisreason, there is no necessity for charging large amounts of additives such as thickeners for maintaining a colloidal state. Hence, concealment of the coated photocatalytic semiconductor particles by the additives can be prevented. Consequently, the photo-semiconductor particles are sufficiently exposed to light, and hence the photo-semiconductor particles can sufficiently exhibit a photocatalytic function. Hence, even a thin coating film can sufficiently exhibit the capability of the photocatalyst, such as the capability to decompose an organic substance or the like.

Sixty-first, any one of the fifty-third, fifty-fourth, fifty-fifth, fifty-eighth, fifty-ninth, and sixtieth configurations is characterized in that the colloidal particles in the second colloidal solution are one time or more the size of the coated photo-semiconductor particle. Therefore, the colloidal particles in the second colloidal solution are one time or more the size of the coated photo-semiconductor particle, andhence a large number of coatedphoto-semiconductorparticles can be adsorbed on the surface of the colloidal particle in the second colloidal solution. Accordingly, the surface area in which the coated photo-semiconductor particles are adsorbed can be made very large. Hence, the capability of the photocatalyst, such as the capability to decompose an organic substance or the like, can be sufficiently exhibited.

Sixty-second, any one of the fifty-third, fifty-fourth, fifty-fifth, fifty-eighth, fifty-ninth, sixtieth, and sixty-first configurations is characterized in that the colloidal particle in the first colloidal solution is 1 to 1.5 times as large as the coated photo-semiconductor particle. Hence, the particle size of the coated photo-semiconductor particles and that of the colloidal particles in the first colloidal solution become equal to or analogous to each other. Therefore, the function of the coated photo-semiconductor and that of the porous colloids can be exhibited in a well-balanced manner. The colloid particles in the first colloidal solution can also be considered to be 0.5 to 1.5 times as large as the coated photo-semiconductor particles.

Sixty-third, any one of the fifty-third, fifty-fourth, fifty-fifth, fifty-eighth, fifty-ninth, sixtieth, sixty-first, and sixty-second configurations is characterized in that the adsorptive function substance is porous calcium phosphate.

Sixty-fourth, any one of the fiftieth to sixty-third configurations is characterized in that the colloidal particles in the first colloidal solution are porous colloidal particles.

Sixty-fifth, the sixty-fourth configuration is characterized in that the colloidal particles in the first colloidal solution are porous sol particles.

Sixty-sixth, any one of the fiftieth to sixty-fifth configurations is characterized in that the colloidal particles in the second colloidal solution include at least one of fluorine emulsion particles, acrylic emulsion particles, acrylic silicon emulsion particles, and acrylic urethane emulsion particles.

### Brief Description of the Drawings

Fig. 1 is a descriptive view showing the structure of a photocatalytical composite contained in a coating agent according to a first embodiment of the invention; Fig. 2 is a descriptive view showing the working condition of the coating agent according to the first embodiment of the invention; Fig. 3 is a descriptive view for describing monolayer absorption andpolymolecular absorption, wherein Fig. 3 (a) is a descriptive view for describing monolayer absorption and Fig. 3(b) is a descriptive view for describing polymolecular absorption; Fig. 4 is a descriptive view showing the structure of a photocatalyst composite contained in a coating agent according to a second embodiment of the invention; Fig. 5 is a descriptive view showing test results; Fig. 6 is a descriptive view showing test results; Fig. 7 is a descriptive view showing test results; Fig. 8 is a descriptive view schematically showing processes for manufacturing the coating agents of the first and second embodiments of the invention; Fig. 9 is a descriptive view showing the structure of the photocatalytic composite contained in a coating agent according to a third embodiment of the invention; Fig. 10 is a descriptive view showing the working condition of a coating agent according to the third embodiment of the invention; Fig. 11 is a descriptive view showing the structure of the photocatalytic composite contained in a coating agent according to a fourth embodiment of the invention; Fig. 12 is a descriptive view showing the structure of the photocatalytic composite contained in a coating agent according to a fifth embodiment of the invention; Fig. 13 is a descriptive view showing the structure of the photocatalytic composite contained in a coating agent according to a sixth embodiment of the invention; and Fig. 14 is a descriptive view schematically showing processes for manufacturing the coating agents of the third to sixth embodiments of the invention.

### Best Modes for Implementing the Invention

Embodiments serving as modes for implementing the invention will be described one after another.

First, a first embodiment of the invention will be described. As shown in Fig. 1, a photocatalytic composite H1 forming a coating agent (a photo-semiconductor coating liquid) of the first embodiment has a structure in which a plurality of photo-semiconductor particles B1 are adsorbed by (or adhere to) the surface of fluorine emulsion particles (colloidal particles) A1. Specifically, the coating agent of the embodiment has a plurality of (specifically a "multitude of") photocatalytic composites H1, and the coating agent of the embodiment has fluorine emulsion particles A1 and the photo-semiconductor particles B1. The coating agent is adsorbed by the surface of a coat surface, such as wood, by way of a primer coating liquid, which will be described in detail later.

The fluorine emulsion particles A1 have a mean particle size of 500 nm. Other colloidal particles may be employed in place of the fluorine emulsion particles A1.

The photo-semiconductor particles B1 are semiconductor particles having a photocatalytic function, and, for example, titanium dioxide (more specifically, anatase-type titanium dioxide is preferable) is used. The photo-semiconductor particles B1 have a mean particle size of 50 nm. Therefore, the ratio of the fluorine emulsion particles A1 to the photo-semiconductor particles B1 in terms of particle size is 10 to 1. Here, unless otherwise specified, the expression "particle size" means the diameter of a particle, (the same also applies to any counterparts in the preceding and following descriptions).

The spherical surface area of the fluorine emulsion particles A1 assumes a value of 785000 nm², and the spherical surface area of the photo-semiconductor particles B1 assumes a value of 1962.5 nm². Theoretically, the surface of the fluorine emulsion particles A1 can adsorb 400 (785000÷1962.5) photo-semiconductor particles B1. Although titanium dioxide is used as the photo-semiconductor particles B1, any chemical, such as cadmium, can be applied to the photo-semiconductor particles, so long as the chemical exhibits a photocatalytic function.

Next, a method for manufacturing the coating agent of the first embodiment will be described. First, 50 grams of photo-semiconductor powder consisting of photo-semiconductor particles having a mean particle size of 50 nm (specifically, anatase-type titanium dioxide powder) is uniformly dispersed into 861 grams of water, thereby preparing a aqueous dispersion(aqueous solution) (see Fig. 8 for a aqueous dispersion manufacturing step). Eighty-none grams (a solid content of 40.05 grams) of fluorine emulsion (a solid content of 45%) consisting of particles having a mean particle size of 500 nm (fluorine emulsion particles) are uniformly mixed into the aqueous dispersion, thereby manufacturing 1000 grams of coating agent (see Fig. 8 for colloidal solution mixing/dispersing processes). In this case, the fluorine emulsion corresponds to the colloidal solution which is mixed during the colloidal solution mixing/dispersing step.

The reason why the photo-semiconductor powder is set to 50 grams is that a concentration of 5% is achieved on the premise that the entire weight of photo-semiconductor powder is set to 1000 grams.

During the process for manufacturing the coating agent of the first embodiment, photo-semiconductor powder is dispersed in water, and fluorine emulsion is then mixed into the aqueous dispersion. However, conversely, fluorine emulsion may be mixed and dispersed in water, and then photo-semiconductor powder mixed and dispersed.

Adsorption of particles (molecules) to a colloidal particle is generally classified into two categories: namely, monolayer adsorption (Langmuir adsorption) and polymolecular adsorption (BET adsorption). Here, the monolayer adsorption is effected on the premise that particles adsorbed by one colloidal particle are arranged in one layer as shown in Fig. 3A and based on the Langmuir adsorption theory. The polymolecular adsorption is effected on the premise that particles adsorbed by one colloidal particle are arranged in multiple layers as shown in Fig. 3B and is based on the BET adsorption theory.

Here, polymolecular adsorption arises during actual adsorption of particles to a colloidal particle. In relation to the above description, even when the amount of photo-semiconductor particles to be employed is made excessively greater than the amount of fluorine emulsion to be employed, stability of the coating agent is deteriorated. Particularly, even when photo-semiconductor particles are adsorbed into an excessively large number of layers, light fails to fall on photo-semiconductor particles remaining hidden behind exterior photo-semiconductor particles. For this reason, the photocatalytic function is not increased much. In view of this point, adsorption of the photo-semiconductor particles B1 to the fluorine emulsion particle A1 in the form of one to two layers is most preferable (Fig. 1 shows one layer of photo-semiconductor particles). A maximum of five layers is preferable. In other words, a preferable number of layers for the photo-semiconductor particles B1 ranges from one to five or thereabouts. As a result of the photo-semiconductor particles being adsorbed into one to five layers or thereabouts, the photo-semiconductor particles B1 can sufficiently exhibit the photocatalytic function. The photo-semiconductor particles can acquire capabilities of a coating agent or paint while maintaining a colloidal state without involvement of a charge of additives. As mentioned previously, in one layer 400 photo-semiconductor particles B1 are adsorbed. Therefore, in five layers 2000 photo-semiconductor particles B1 are adsorbed.

At the time of actual adsorption operation, the number of layers is not necessarily uniform. There may arise a phenomenon wherein two layers are formed in some areas, and one layer is formed in another area. For this reason, the expression "photo-semiconductor particles are adsorbed on the surface of a colloidal particle within the range from one to five layers" includes the following cases. In one case, any of one to five layers is formed over the entire surface of one colloidal particle [e.g., one layer (or two, three, four, or five layers) is formed over the entire surface of one colloidal particle]. In another case, among one to five layers a plurality of total numbers of layers [e.g., two layers are formed in one area on the surface of one colloidal particle, and one layer is formed in the remaining area of the same; or four layers are formed in one area on the surface of one colloidal particle, three layers are formed in another area of the same, and two layers are formed in the remaining area of the same] are provided on the entire surface of one colloidal particle. A state in which "photo-semiconductor particles are adsorbed on the surface of a colloidal particle within the range from one to two layers" and a state in which "photo-semiconductor particles are adsorbed on the surface of a colloidal particle within the range from one to three layers" can be said to be more preferable.

In relation to the foregoing manufacturing method, a colloid other than fluorine emulsion may also be employed.

Amethod for using the coating agent formed in the foregoing manner will now be described. On the occasion of use of this coating agent, a primer coating agent is used. An acrylic silicon emulsion (anion having a mean particle size of 100 nm and a solid content of 40%) is used as the primer coating liquid, in an amount of 40 grams. As shown in Fig. 2, the primer coating liquid is applied over an application surface P1 in an amount of 100 g/m², thereby forming a primer layer Q1. After the primer layer Q1 has been naturally dried for about 30 minutes, the coating agent is applied over the primer layer in an amount of 50 g/m², thereby forming a coating agent layer G1. Alternatively, the coating agent of theembodimentmaybe applied directly over the application surface without use of such a primer coating liquid.

The coating agent of the first embodiment formed in the manner as mentioned above is realized by the photo-semiconductor particles B1 being adsorbed on the surface of the fluorine emulsion particle A1 serving as a colloidal particle. Hence, the photo-semiconductor particlesBlcan be efficiently exposed to light on the surface of the fluorine emulsion particle A1, thereby stably exhibiting a photocatalytic function. Moreover, the photo-semiconductor particles B1 can wholly be exposed to light on the surface of the fluorine emulsion particle A1. Therefore, the photo-semiconductor particles B1 can be prevented from mutually hindering exposure, which would otherwise be caused when the photo-semiconductor particles B1 are dispersed. Therefore, efficiency can be enhanced conspicuously. Accordingly, the capability of photocatalyst, such as a capability to decompose an organic substance, can be sufficiently exhibited even on a thin coating film.

Since the ratio of the fluorine emulsion particle A1 to the photo-semiconductor particle B1 in terms of particle size is 10 to 1, a plurality of photo-semiconductor particles B1 can be adsorbed on the surface of the fluorine emulsion particle A1. Accordingly, a surface area which enables effective exhibition of a photocatalytic function can be made very large within a small volume. Therefore, the capability of photocatalyst, such as a capability to decompose an organic substance, can be sufficiently exhibited on a thin coating film with a small volume.

The content of the photo-semiconductor particles B1 assumes a weight ratio of 5% (50 grams/1000 grams). Since the content of photo-semiconductor particles B1 is low, there is no necessity for charging a large amount of additives, such as a thickener, to be used for maintaining a colloidal state, thereby inhibiting the additives from concealing the photo-semiconductor particles B1. Since the photo-semiconductor particles B1 are sufficiently exposed to light, the photo-semiconductor particles B1 can sufficiently exhibit a photocatalytic function. Therefore, the capability of photocatalyst, such as a capability to decompose an organic substance, can be sufficiently exhibited on a thin coating film.

The amount of fluorine emulsion to be employed is also adjusted such that the photo-semiconductor particles are adsorbed to the fluorine emulsion particle in one to five layers (preferably one to two layers). Hence, a stable characteristic can be obtained for a coating agent.

As mentioned previously, the coating agent is formed such that the ratio of the fluorine emulsion particle A1 to the photo-semiconductor particle B1 in terms of particle size is 10 to 1. Therefore, a large space can be formed around the fluorine emulsion particle A1. As a result, the coating agent can acquire a sufficient translucent characteristic and is provided with sufficient gas permeability and sufficient humidity conditioning characteristics. Therefore, the coating agent can be applied to a natural raw material, such as wood, which requires gas permeability, and humidity absorption and conditioning effects of a raw material can also be acquired.

A second embodiment will now be described. The second embodiment is substantially identical with the coating liquid of the first embodiment. As will be described later, the second embodiment differs from the first embodiment in that acrylic emulsion is used as colloidal particles and in that the surface of a photo-semiconductor is coated by producing apatite on the surface. In other respects, a coating liquid of the second embodiment is substantially identical with that of the first embodiment, and hence overlapping portions are omitted.

As shown in Fig. 4, the structure of a photocatalyst composite H2 forming a coating agent (a photo-semiconductor coating liquid) of the second embodiment is embodied by means of a plurality of coated composite photo-semiconductor particles B2 being adsorbed on the surface of an acrylic emulsion particle (colloidal particle) A2. In other words, the coating agent of the embodiment has a plurality of photocatalyst composites H2 (more specifically, a large number of photocatalyst composites). The coating agent of the embodiment has the acrylic emulsion particles A2 and the coated composite photo-semiconductor particles B2.

The acrylic emulsion particle A2 has a mean particle size of 1 µm. Another colloidal particle may be employed in lieu of the acrylic emulsion particle.

The coated composite photo-semiconductor particle (coated photo-semiconductor particle) B2 is formed from a photo-semiconductor particle B21, and apatite B22 covering the surface thereof. The surface of the photo-semiconductor particle B21 is coated with the apatite B22 serving as an adsorbing-function substance, whereby the surface is made into a composite. The coated composite photo-semiconductor particle B2 has a mean particle size of 50 nm and a specific surface area of 70 m²/g. Accordingly, the ratio of the acrylic emulsion particle A2 to the coated composite photo-semiconductor particle B2 in terms of particle size is 20 to 1. The coated composite photo-semiconductor particle B2 serves as the previously-described coated photo-semiconductor particle.

The photo-semiconductor particle B21 is a semiconductor particle having a photocatalytic function, and, for example, titanium dioxide (more specifically, preferably anatase-type titanium dioxide) is used. Although titanium dioxide is used as the photo-semiconductor particles B21, any chemical, such as cadmium, can be applied to the photo-semiconductor particles, so long as the chemical exhibits a photocatalytic function.

The apatite B22 is a generic name for minerals having a composition of M₁₀(ZO₄)₆X₂. Among them, hydroxyapatite expressed by Ca₁₀(PO₄)₆(OH)₂ is known as a principal constituent of inorganic components, such as bones and teeth. The apatite B22 is known for having the ability to adsorb protein. The apatite B22 is used as a filler for chromatography purpose and for separating and refining protein or a nucleic acid. The apatite also has the function for adsorbing viruses such as influenza viruses, or bacteria such as coli bacteria. Once having been adsorbed, the viruses will not depart from the apatite under ordinary conditions and remain permanently adsorbed. The apatite also has the ability to adsorb gases, such as ammonia or Noₓ. The apatite B22 preferably corresponds to at least a kind of calcium phosphate selected from among apatite hydroxide, apatite carbonate, apatite fluoride, and apatite hydroxy. Moreover, another porous calcium phosphate may also be employed.

In the photocatalyst composite H2 of the embodiment, the ratio of the acrylic emulsion particle A2 to the coated composite photo-semiconductor particle B2 in terms of particle size is 20 to 1. Hence, the spherical surface area of the acrylic emulsion particle A2 assumes a value of 3140000 nm², and the spherical surface area of the coated composite photo-semiconductor particle B2 assumes a value of 1962.5 nm². Theoretically, 1600 (3140000÷1962.5) coated composite photo-semiconductor particles B2 can be adsorbed on the surface of the acrylic emulsion particle A2.

Fig. 4 shows presence of the apatite B22 in an exaggerated manner; the actual thickness of the apatite B22 is very nominal.

Amethod for manufacturing the coating agent of the second embodiment will now be described. First, the photo-semiconductor particles B21 are coated with the apatite B22 to become composites, thereby producing the coated composite photo-semiconductor particles B2. In this case, various methods, such as a sintering method and an aqueous solution method, are used as the method for coating the apatite B22. In this case, according to a method using an aqueous solution such as awetmethod, preparation of apatite involves consumption of a period of a week or longer, thereby adding to costs. Sintering at high temperatures is usually indispensable for generating an apatite crystal. However, this method requires a large quantity of energy.

For these reasons, there is employed a technique for producing the apatite B22 on the surface of the photo-semiconductor particle B21 through a biomimetic material process; that is, a method based on a process for synthesizing an inorganic composition in vivo through use of a pseudo body fluid, wherein application of this method has recently been adopted as a method for synthesizing an artificial bone. Specifically, a composition is adjusted so as to precipitate OCP, and the photo-semiconductor particles B21 are immersed in a pseudo body fluid maintained at a temperature of 37°C, which is close to normal body temperature. The photo-semiconductor particles are dispersed in a tank filled with a pseudo body fluid and held in water having a temperature of 37 to 40°C.

The OCP is a precursor appearing at the time of generation of apatite and is expressed by a structural formula of Ca₈H₂(PO₄)₆5H₂O. In addition to OCP, TCP or ACP may also be employed. The pseudo body fluid contains 0.5 to 50 mM of Ca²⁺ and 1 to 20 mM of HPO₄²⁻. Specifically, the pseudo body fluid is adjusted by dissolving, in water, NaCl, NaHCO₃, KCl, K₂HPO₄·3H₂O, MgCl₂·6H₂O, CaCl₂, Na₂SO₄, or NaF. Preferably, pH is adjusted to a value of 7 to 8, particularly preferably a value of 7.4, through use of HCl or (CH₂CH)₃CNH₂ or the like. A preferable composition of the pseudo body fluid used in the present invention includes Na⁺ (120 to 160 mM) , K⁺ (1 to 20 mM), Ca²⁺ (0.5 to 50 mM), Mg²⁺ (0.5 to 50 mM), Cl⁻ (80 to 200mM), HCO³⁻ (0.5 to 30 mM), HPO₄²⁻ (1 to 20 mM) , SO₄²⁻ (0.1 to 20 mM), and F⁻ (0 to 5 mM). If the concentration of the composition is lower than the foregoing concentration, generation of calcium phosphate consumes much time. In contrast, if the concentration of the composition is higher than the foregoing concentration, generation of calcium phosphate arises abruptly, thereby posing difficulty in controlling the degree of porosity and a thickness of a film.

When the liquid in the tank is continuously agitated, minute OCP crystals are deposited on the surface of the photo-semiconductor particles B21 within an hour, thereby coating the surfaces of the photo-semiconductor particles B21. Subsequently, the OCP crystals are decomposed and converted into apatite.

The tank is then pulled up from the pseudo body fluid and left, whereupon the photo-semiconductor particles coated with apatite are precipitated, and supernatant liquid flows. After water has been poured into the tank, the water is drained. These operations are repeated several times. The sediment remaining in the tank is dried, whereby photo-semiconductor particles coated with apatite; i.e., powder of coated composite semiconductor particles, is obtained. The powder of coated composite semiconductor particles corresponds to the coated semiconductor particles. Here, the powder of coated composite semiconductor particles may sometimes also be called "powder of coated composite photo-semiconductor" or "coated composite photo-semiconductor powder."

In the second embodiment, a method based on a process for synthesizing an inorganic composition in vivo through use of a pseudo body fluid is employed as the method for coating the photo-semiconductor particles B21 with the apatite B22 to form a composite. As compared with another method, the method can considerably shorten a synthesis time, thereby enabling an improvement in productivity. Particularly, apatite is produced within about 10 hours by way of OCP. Apatite crystal can be obtained within a considerably shorter period of time as compared with a case where apatite is produced directly.

There arises no deterioration in translucent characteristic, which would otherwise be caused by coating titanium dioxide acting as the photo-semiconductor particles B21 with the apatite B22. Further, the photocatalytic function of the photo-semiconductor particle B21 is not impaired. Since the photo-semiconductor particles are coated with the apatite B22, the substance fails to approach the surface of titanium dioxide, and therefore deterioration of the photocatalytic function does not arise. The supposed reason for this is that apatite is sparsely precipitated on the surface of the photo-semiconductor particles B21, thereby failing to conceal the entire surface of the photo-semiconductor particle.

Under the foregoing method, an aqueous dispersion is prepared by uniformly dispersing 50 grams of powder consisting of coated composite semiconductor particles (coated photo-semiconductor particles) (a mean particle size of 50 nm and a specific surface area of 70 m²/g), the particles being formed by producing the apatite B22 so as to coat the surface of the photo-semiconductor particles B21, into 773 grams of water (see Fig. 8 for an aqueous dispersionmanufacturing step). In this case, 177 grams of acrylic emulsion (having a solid content of 45%) consisting of acrylic emulsion particles having a mean particle size of 1 µm is uniformly dispersed into the aqueous dispersion, thereby completing manufacture of 1000 grams of coating agent (see Fig. 8 for a colloidal solution mixing/dispersing step). The acrylic emulsion employed in this case corresponds to the colloidal solution to be mixed during the colloidal solution mixing/dispersing step.

The reason why powder formed from coated composite photo-semiconductor particles; that is, the coated composite photo-semiconductor powder, is set to 50 grams is that a concentration of 5% is achieved on the premise that the entire weight of the coating agent is set to 1000 grams.

During the process for manufacturing the coating agent of the second embodiment, powder consisting of coated photo-semiconductor particles is dispersed in water, and acrylic emulsion is mixed into the aqueous dispersion. However, conversely, acrylic emulsion may be mixed and dispersed in water, after which the powder consisting of coated photo-semiconductor particles is mixed and dispersed in the solution.

As in the case of the first embodiment, adsorption of the coated composite photo-semiconductor to acrylic emulsion in the form of one to two layers is most preferable (Fig. 1 shows one layer of coated composite photo-semiconductor). A maximum of five layers is preferable. In other words, a preferable number of layers for the coated composite photo-semiconductor particles ranges from one to five or thereabouts. As a result of the photo-semiconductor particles being adsorbed into one to five layers or thereabouts, the photocatalytic function of the coated composite photo-semiconductor particles can be sufficiently exhibited. Concurrently, the coated composite photo-semiconductor particles can acquire capabilities of a coating agent or paint while maintaining a colloidal state without involvement of a charge of additives. As mentioned previously, in one layer 400 coated composite photo-semiconductor particles B2 are adsorbed. Therefore, in five layers 2000 coated composite photo-semiconductor particles B2 are adsorbed.

At the time of actual adsorption operation, the number of layers is not necessarily uniform. There may arise a phenomenon wherein two layers are formed in some areas, and one layer is formed in another area. For this reason, the expression "coated composite photo-semiconductor particles are adsorbed on the surface of a colloidal particle within the range from one to five layers" includes the following cases. In one case, any of one to five layers is formed over the entire surface of one colloidal particle [e.g., one layer (or two, three, four, or five layers) is formed over the entire surface of one colloidal particle]. Inanothercase, among one to five layers a plurality of total numbers of layers [e.g., two layers are formed in one area on the surface of one colloidal particle, and one layer is formed in the remaining area of the same; or four layers are formed in one area on the surface of one colloidal particle, three layers are formed in another area of the same, and two layers are formed in the remaining area of the same] are formed over the entire surface of one colloidal particle. A state in which "coated composite photo-semiconductor particles are adsorbed on the surface of a colloidal particle within the range from one to two layers" and a state in which "coated composite photo-semiconductor particles are adsorbed on the surface of a colloidal particle within the range from one to three layers" can be said to be more preferable.

Amethod forusingthe coating agent formed in the foregoing manner will now be described. On the occasion of use of this coating agent, a primer coating agent is used as in the case of the first embodiment. Fluorine emulsion (anion having a mean particle size of 100 nm and a solid content of 45%) is used as the primer coating liquid, in an amount of 100 grams. The primer coating agent of the embodiment is applied over the application surface P1 in an amount of 50 g/m², thereby forming a primer layer. After the primer layer has been naturally dried for about 30 minutes, the coating agent is applied over the primer layer in an amount of 50 g/m², thereby forming a coating agent layer. Alternatively, the coating agent of the embodiment may be applied directly over the application surface without use of such a primer coating liquid.

In addition to the effect yielded by the coating agent of the first embodiment, the coating agent of the second embodiment formed in the manner as mentioned above yields an effect of the photo-semiconductor particles B21 being coated with the apatite B22, to thereby form a composite. Hence, the apatite B22 enables an improvement in the capability to adsorb bacteria or organic substances. Further, the thus-adsorbed bacteria or organic substances are decomposed by the photo-semiconductor particles B21, and hence the capability to process bacteria or the like can be improved. Moreover, the photo-semiconductor particles B21 decompose adsorbed bacteria or the like, and hence the adsorbing surface of the apatite B22 can be preferably prevented from being saturated by the adsorbed substance, thereby preventing deterioration of the adsorbing capability of the apatite B22.

Since the apatite B22 serves as a spacer, the photo-semiconductor particles B21 do not come into direct contact with particles of another base material or the like. Therefore, the catalytic action of thephotocatalyst canprevent decomposition of the binder or base material. Therefore, the coating agent of the embodiment can be contained in organic resin. Further, the coating agent can be used for an organic substance, such as fibers, wood, or plastic.

The coating agent of the embodiment also yields the effect yielded by the coating agent of the first embodiment. More specifically, the coated composite photo-semiconductor particles B2 can be efficiently exposed to light on the surface of the acrylic emulsionparticlesA2, thereby exhibiting a stable photocatalytic function. Moreover, the coated composite photo-semiconductor particles B2 can wholly be exposed to light on the surface of the acrylic emulsion particle A2. Therefore, the coated composite photo-semiconductor particles B2 can be prevented from mutually hindering exposure, which would otherwise occur when the coated composite photo-semiconductor particles B2 are dispersed. Therefore, efficiency can be enhanced conspicuously. Accordingly, even a thin coating film can sufficiently exhibit the capability of photocatalyst, such as a capability to decompose an organic substance.

Since the ratio of the acrylic emulsion particle A2 to the coated composite photo-semiconductor particle B2 in terms of particle size is 20 to 1, a plurality of coated composite photo-semiconductor particles B2 can be adsorbed on the surface of the acrylic emulsion particle A2. Therefore, even a thin coating film of small volume can sufficiently exhibit the capability of photocatalyst, such as a capability to decompose an organic substance.

The content of the coated composite photo-semiconductor particles B2 assumes a weight ratio of 5% (50 grams/1000 grams). Since the content of coated composite photo-semiconductor particles B2 is low, there is no necessity for charging a large amount of additives, such as a thickener, to be used for maintaining a colloidal state, thereby inhibiting the additives from concealing the coated composite photo-semiconductor particles B2. Since the coated composite photo-semiconductor particles B2 are sufficiently exposed to light, the coated composite photo-semiconductor particles can sufficiently exhibit a photocatalytic function. Therefore, a thin coating film can sufficiently exhibit the capability of photocatalyst, such as a capability to decompose an organic substance.

The amount of acrylic emulsion to be employed is also adjusted such that the coated composite photo-semiconductor particles are adsorbed to the acrylic emulsion particle in one to two layers. Hence, a stable characteristic can be obtained for a coating agent.

As mentioned previously, the coating agent is formed such that the ratio of the acrylic emulsion particle A2 to the coated composite photo-semiconductor particle B2 in terms of particle size is 20 to 1. Therefore, a large space can be formed around the coated photo-composite semiconductor particle A2. As a result, the coating agent can acquire a sufficient translucent characteristic andisprovided withsufficient gaspermeability and sufficient humidity conditioning characteristics. Therefore, the coating agent can be applied to a natural raw material, such as wood, which requires gas permeability, and humidity absorption and conditioning effects of a raw material can also be acquired.

Test results of the coating agent of the second embodiment will now be described. In a first test, a test for deodorizing acetaldehyde was conducted. Specifically, the surface area of a sample was set to 10 cm x 10 cm; irradiation requirements were set to two black lights of 15 watts; and the quantity of light on the surface of the sample was set to 1.0 nW/cm². Test results obtained under the requirements are shown in Fig. 5. As is evident from Fig. 5, in the case of the coating agent of the second embodiment, acetaldehyde was completely decomposed after the sample had been exposed for about four hours, as indicated by a curve D1. It has been ascertained that acetaldehyde can be decomposed at a speed twice or more the speeds at which acetaldehyde is decomposed by samples coated with other photo-semiconductor agents.

In a second test, a test for decomposing NOₓ was conducted. Test results are shown in Fig. 6. As is evident from Fig. 6, in the case of the coating liquid of the second embodiment, NOₓ was completely decomposed after the sample had been exposed for about eight hours, as indicated by a curve D2. It has been ascertained that acetaldehyde can be decomposed at a speed twice ormore the speeds at which acetaldehyde is decomposed by samples coated with other photo-semiconductor agents. As in the case of the first test, requirements for the second test were set; that is, the surface area of a sample was set to 10 cm x 10 cm; irradiation requirements were set to two black lights of 15 watts; and the quantity of light on the surface of the sample was set to 1.0 nW/cm².

A third test is a test for decomposing NOₓ. In the third embodiment, a test specimen coated with the coating agent of the embodiment, a test specimen coated with a coating agent containing merely titanium oxide, and a test specimen remaining unprocessed (each test specimen measures 10-cm square) were placed in sealed bags. An NOₓ gas of a concentration of about 30 ppm was charged in the respective sealed bags, and NOₓ concentrations were measured by a detector tube. After lapse of 45 minutes since the start of the test, the specimens were exposed to UV rays. Variations in the NOx concentrations were measured from when the specimens were shielded to when the specimens were exposed. Results of the third test are shown in Fig. 7. In Fig. 7, "apatite-titanium dioxide" indicates a case where the coating agent of the present embodiment was used. "Titanium dioxide" indicates a case where a coating agent containing mere titanium dioxide was used. "Blank" indicates a case where specimens were subjected to no treatment. According to results shown in Fig. 7, when the specimens are coated with the coating agent of the present embodiment, the decomposition speed of NOₓ is fast. A point to which attention must be paid lies in that when the coating agent of the embodiment was used, NOₓ was decomposed even when the specimens were shielded from light.

The respective embodiments have bee described while the ratio of the particle size of the colloidal particle to that of the photo-semiconductor particle (or the coated composite photo-semiconductor particle) was taken as 10:1 and 20:1. However, the only requirement is that the colloidal particle be the same size as or larger than the photo-semiconductor particle (or the coated composite photo-semiconductor particle). Here, even when the particle size of the colloidal particle is the same size as the photo-semiconductor particle (or the coated composite photo-semiconductor particle), there is obtained a spherical surface area (4πr²)/a spherical cross-sectional area (πr²)=4. Four photo-semiconductor particles (or coated composite photo-semiconductor particles) can be adsorbed around the colloidal particle. Hence, many photo-semiconductor particles (or coated composite photo-semiconductor particles) can be said to be adsorbed. A case where the colloidal particle is one time or more the size of the photo-semiconductor particle (or the coated composite photo-semiconductor particle) can be said to be preferable. A case where the colloidal particle is twice or more the size of the photo-semiconductor particle (or the coated composite photo-semiconductorparticle) can be said to be more preferable. A case where the colloidal particle is ten times or more the size of the photo-semiconductor particle (or the coated composite photo-semiconductor particle) can be said to be much more preferable. The colloidal particle may also be set so as to be 1 to 1000 times the size of the photo-semiconductor particle (or the coated composite photo-semiconductor particle).

Although the concentration of the photo-semiconductor particles and that of the coated composite photo-semiconductor particles have been described as assuming a value of 5% and a value of 2.5%, respectively, the only requirement is that the concentrations range from 0.1% to 10%.

The respective embodiments illustrate examples in which a photocatalyst composite is used as a coating agent. In the case of a paint, the only requirement is to mix respective coating agents with pigment, as required.

The present invention is not limited solely to the embodiments. For instance, the photo-semiconductor particles include all particles having the function of a photo-semiconductor. In addition to the photo-semiconductor particles, particles having a photocatalytic function may also beemployed. Particularly, in relation to the foregoing claims, "photocatalytic function particles" may be used in lieu of "photo-semiconductor particles," and "coated photocatalytic function particles" may be employed in place of "coated photo-semiconductor particles." The photocatalytic function particles signify particles having photocatalytic functions.

In the respective embodiments, the photocatalyst composite is taken as being mixed with a coating agent or paint. However, substances into which the photocatalyst composite is mixed are not limited to these substances and include all substances, such as an antibacterial agent, a rust-preventive agent, or a depurator, which enable mixing of the photocatalyst composite.

Fig. 1 illustrates a state in which the photo-semiconductor particles B1 are adsorbed in the form of amonolayer, and Fig. 4 shows a state inwhich the coated composite photo-semiconductor particles B2 are adsorbed in the form of a monolayer. Figs. 1 and 4 show idealistic states of monolayer adsorption. Figs. 1 and 4 schematically show a photocatalytic composite. In reality, the number of particles adsorbed on the surface of a colloidal particle is not limited to those shown in Figs. 1 and 4. Further, in contrast with the cases as shown in Figs. 1 and 4, in reality particles are not necessarily adsorbed without gaps.

In the respective embodiments, colloidal particles having one mean particle size are contained. However, a plurality of kinds of colloidal particles of different mean particle sizes may be contained.

The foregoing descriptions have described colloids by taking fluorine emulsion and acrylic emulsion as example colloids. However, other colloids may be employed. Moreover, the adsorptive function substance has been described by means of taking apatite as an example. Another substance; that is, another substance having an adsorptive function, may also be employed.

A third embodiment will now be described. As shown in Fig. 9, a photocatalyst composite H3 forming a coating agent (a photo-semiconductor coating liquid) of the third embodiment has a structure in which a plurality of photo-semiconductor particles B3 and porous sol particles (porous colloidal particles or second colloidal particles) C3 are adsorbed by (or adhere to, and the same also applies to any counterparts in the following descriptions) the surface of acrylic silicon emulsion particles (first colloidal particles) A3. Specifically, the coating agent of the embodiment has a plurality of (specifically a "multitude of") photocatalyst composites H3, and the coating agent of the embodiment has acrylic silicon emulsion particles A3, the photo-semiconductor particles B3, and the porous sol particles C3.

The acrylic silicon emulsion particles A3 have a mean particle size of 500 nm. Other colloidal particles may be employed in place of the acrylic silicon emulsion particles.

The photo-semiconductor particles B3 are semiconductor particles having a photocatalytic function, and, for example, titanium dioxide (more specifically, anatase-type titanium dioxide is preferable) is used. Other substances, such as cadmium, can also be employed, so long as they have the photocatalytic function. The photo-semiconductor particles B3 have a mean particle size of 50 nm. Therefore, the ratio of the acrylic silicon emulsion particles A3 to the photo-semiconductor particles B3 in terms of particle size is 10 to 1. Here, unless otherwise specified, the expression "particle size" means the diameter of a particle (the same also applies to any counterparts in the preceding and following descriptions).

The porous sol particles C3 are porous sol particles. For instance, silica sol is used as porous sol. The porous sol particle C3 has a mean particle size of 50 nm. Therefore, the mean particle size of the photo-semiconductor particles B3 and that of the porous sol particles C3 are identical with each other. Individual photo-semiconductor particles B3 and individual porous sol particles C3 are substantially identical in particle size with each other. As a result, if the porous sol particles C3 are larger than the photo-semiconductor particles B3, the porous sol particles C3 may conceal the photo-semiconductor particles B3, thereby impairing the function of the photo-semiconductor particles B3. In the present embodiment, the photo-semiconductor particles B3 and the porous sol particles C3 are substantially identical in size with each other, and hence there is no such a potential risk. Moreover, the porous sol particles C3 provide an adhesive function when the coating agent adheres to a base material and also provide the function for assisting adhesion between the acrylic silicon emulsion particles A3 and the photo-semiconductor particles B3. In addition, the porous sol particles C3 provide the function of rendering the coating agent multifunctional. More specifically, when the porous sol particles C3 are silica sol, a self-cleaning function is provided. In the case of porous zinc oxide, the coating agent is imparted with an antibacterial function and a UV shielding function. Here, the self-cleaning function is a function which utilizes a hydrophilic characteristic of the silica sol and prevents stains from remaining on the surface coated with the coating agent as a result of NOₓ decomposed by the photo-semiconductor particles being flushed with water.

The acrylic silicon emulsion particles A3, the photo-semiconductor particles B3, and the porous silicon emulsion particles C3 assume the foregoing sizes. Hence, the spherical surface area of the acrylic silicon emulsion particles A3 assumes a value of 785000 nm², and the spherical cross-sectional area of the photo-semiconductor particles B3 and that of the porous sol particles C3 assume a value of 1962.5 nm². Theoretically, the surface of the acrylic silicon emulsion particles A3 can adsorb a total of 400 photo-semiconductor particles B3 and porous sol particles C3 (785000÷1962.5).

Next, a method for manufacturing the coating agent of the third embodiment will be described. First, 25 grams of photo-semiconductor powder consisting of photo-semiconductor particles having a mean particle size of 50 nm (specifically, anatase-type titanium dioxide powder) are uniformly dispersed in 868 grams of water, thereby preparing an aqueous dispersion (see Fig. 14 for an aqueous dispersion manufacturing step).

Forty grams of 20% silica sol solution consisting of silica sol particles serving as porous sol particles C3 is mixed into the aqueous dispersion, and the solution is dispersed until the solution becomes uniform, thereby preparing an aqueous mixture (see Fig. 14 for first colloidal solution mixing/dispersing processes). In this case, the silica sol solution corresponds to the first colloidal solution. The silica sol particles correspond to "colloidal particles in the first colloidal solution."

Sixty-seven grams of acrylic silicon emulsion (a solid content of 45%) consisting of acrylic silicon emulsion particles having a mean particle size of 500 nm is further uniformly dispersed in the aqueous mixture (i.e., the aqueous mixture produced in the first mixing/dispersing step), thereby completing manufacture of 1000 grams of coating agent (see Fig. 14 for a second mixing/dispersing step). In this case, the acrylic silicon emulsion to be mixed corresponds to the second colloidal solution. Moreover, the acrylic silicon emulsion particles correspond to the previously-described "colloidal particles in a second colloidal solution." The aqueous mixture manufacturing process defined in the foregoing description and claims is constituted of the first and second mixing/dispersng steps.

The reason why the coated composite photo-semiconductor powder is set to 25 grams is that a concentration of 2.5% is achieved on the premise that the entire weight of the coating agent is set to 1000 grams.

In the process for manufacturing the coating agent of the third embodiment, photo-semiconductor powder is disposed in water, and silica sol solution is mixed and dispersed into the aqueous dispersion. Subsequently, acrylic silicon emulsion is mixed and dispersed in the aqueous mixture. However, the process for dispersing photo-semiconductor powder, the process for mixing and dispersing silica sol solution, and the process for mixing and dispersing acrylic silicon emulsion are arbitrary.

Adsorption of particles (molecules) to a colloidal particle is generally classified into two categories: namely, monolayer adsorption (Langmuir adsorption) and polymolecular adsorption (BET adsorption). Here, the monolayer adsorption is effected on the premise that particles adsorbed by one colloidal particle are arranged in one layer as shown in Fig. 3A, and is based on the Langmuir adsorption theory. The polymolecular adsorption is effected on the premise that particles adsorbed by one colloidal particle are arranged in multiple layers as shown in Fig. 3B, and is based on the BET adsorption theory.

Here, polymolecular adsorption arises during actual adsorption of particles to a colloidal particle. In relation to the above description, even when the amount of photo-semiconductor particles to be employed is made excessively larger than the amount of acrylic silicon emulsion to be prescribed, stability of the coating agent is deteriorated. Particularly, even when photo-semiconductor particles are adsorbed into an excessively large number of layers, light fails to fall on photo-semiconductor particles remaining hidden behind exterior photo-semiconductor particles. For this reason, the photocatalytic function is not increased much. In view of this point, adsorption of the photo-semiconductor particles B3 and the porous sol particles (porous colloidal particles) C3 to the acrylic silicon emulsion particle A3 in the form of one to two layers is most preferable (Fig. 9 shows one layer of photo-semiconductor particles). A maximum offive layers is preferable. In other words, a preferable number of layers consisting of the photo-semiconductor particles B3 and the porous sol particles C3 ranges from one to five or thereabouts. As a result of the photo-semiconductor particles being adsorbed into one to five layers or thereabouts, the photocatalytic function of the photo-semiconductor particles can be sufficiently exhibited. Concurrently, capabilities of a coating agent or paint can be imparted to thephoto-semiconductor particles while maintaining a colloidal state without involvement of a charge of additives. As mentioned previously, in one layer a total of 400 photo-semiconductor particles B3 and porous sol C3 are adsorbed. Therefore, in five layers a total of 2000 photo-semiconductor particles B3 and porous sol particles C3 are adsorbed.

At the time of actual adsorption operation, the number of layers is not necessarily uniform. There may arise a phenomenon wherein two layers are formed in some areas, and one layer is formed in another area. For this reason, expressions "a group of layers-each layer consists of photo-semiconductor particles and porous colloidal particles (second colloidal particles) and the number of layers to be stacked ranges from one to five-are adsorbed on the surface of a colloidal particle"; "the photo-semiconductor particles and the porous colloidal particles (second colloidal particles) are adsorbed on the surface of the colloidal particle within the range from one to five layers"; and "a layer consisting of photo-semiconductor particles and porous colloidal particles (second colloidal particles) are adsorbed on the surface of a colloidal particle within the range from one to five layers" include the following cases. In one case, any of one to five layers is formed over the entire surface of one colloidal particle [e.g., one layer (or two, three, four, or five layers) is formed over the entire surface of one colloidal particle]. In another case, among one to five layers a plurality of total numbers of layers [e.g., two layers are formed in one area on the surface of one colloidal particle, and one layer is formed in the remaining area of the same; or four layers are formed in one area on the surface of one colloidal particle, three layers are formed in another area of the same, and two layers are formed in the remaining area of the same] are formed over the entire surface of one colloidal particle.

A state in which "a group of layers-each layer consists of photo-semiconductor particles and porous colloidal particles (second colloidal particles) and the number of layers to be stacked ranges from one to two-are adsorbed on the surface of a colloidal particle {or this may also be taken as a state in which a layer consisting of photo-semiconductor particles and porous colloidal particles (second colloidal particles) is adsorbed on the surface of a colloidal surface within the range from one to two layers}"; or a state in which "a group of layers-each layer consists of photo-semiconductor particles and porous colloidal particles (second colloidal particles) and the number of layers to be stacked ranges from one to two-are adsorbed on the surface of a colloidal particle {or this may also be taken as a state in which a layer consisting of photo-semiconductor particles and porous colloidal particles (second colloidal particles) is adsorbed on the surface of a colloidal surface within the range from one to three layers}" can be said to be more preferable.

In relation to the foregoing manufacturing method, another colloid other than acrylic silicon emulsion may also be employed.

A method for using the coating agent of the embodiment manufactured in the manner mentioned above will now be described. As shown in Fig. 10, the coating agent is used while being applied directly over a coating surface P3, such as a concrete surface or a wood surface, without use of a primer coating liquid. As a result, a coating agent layer G3 is formed. At this time, the coating agent is chiefly adsorbed by the coating surface P3 by means of the function of the porous sol particles C3 in the coating agent.

According to the coating agent of the third embodiment formed in the manner as mentioned previously, the photo-semiconductor particles B3 are adsorbed on the surface of the acrylic silicon emulsion particle A3 serving as a colloidal particle. Hence, the photo-semiconductor particles B3 can be efficiently exposed to light on the surface of the acrylic silicon emulsion particle A3, thereby stably exhibiting a photocatalytic function. Moreover, the photo-semiconductor particles B3 can wholly be exposed to light on the surface of the acrylic silicon emulsion particle A3. Therefore, the photo-semiconductorparticles B3 canbeprevented from mutually hindering exposure, which would otherwise be caused when the photo-semiconductor particles B3 are dispersed. Therefore, an efficiency can be enhanced conspicuously. Accordingly, even a thin film can sufficiently exhibit the capability of photocatalyst, such as a capability to decompose an organic substance.

Since the ratio of the acrylic silicon emulsion particle A3 to the photo-semiconductor particle B3 in terms of particle size is 10 to 1, a plurality of photo-semiconductor particles B3 can be adsorbed on the surface of the acrylic silicon emulsion particle A3. Accordingly, a thin film of small volume can sufficiently exhibit the capability of photocatalyst, such as a capability to decompose an organic substance.

The content of the photo-semiconductor particles B3 assumes a weight ratio of 2.5% (25 grams/1000 grams). Since the content of photo-semiconductor particles B3 is low, there is no necessity for charging a large amount of additives, such as a thickener, to be used for maintaining a colloidal state, thereby inhibiting the additives from concealing the photo-semiconductor particles B3. Since the photo-semiconductor particles B3 are sufficiently exposed to light, the photo-semiconductor particles B3 can sufficiently exhibit a photocatalytic function. Therefore, a thin coating film can sufficiently exhibit the capability of photocatalyst, such as a capability to decompose an organic substance.

The amount of acrylic silicon emulsion to be prescribed is also adjusted such that the photo-semiconductor particles are adsorbed to the acrylic silicon emulsion particle in one to two layers. Hence, a stable characteristic of a coating agent can be obtained.

As mentioned previously, the coating agent is formed such that the ratio of the acrylic silicon emulsion particle A3 to the photo-semiconductor particle B3 in terms of particle size is 10 to 1. Therefore, a large space can be formed around the acrylic silicon emulsion particle A3. As a result, the coating agent can acquire a translucent characteristic and is provided with sufficient gas permeability and sufficient humidity conditioning characteristics. Therefore, the coating agent can be applied to a natural raw material, such as wood, which requires gas permeability, and humidity absorption and conditioning effects of a raw material can also be acquired.

Further, the porous sol particles C3 are adsorbed on the surface of the acrylic emulsion particles A3. Hence, the porous sol particles provide an adhesive function when the coating agent adheres to a base material; that is, an coating surface, and also provide the function for assisting adhesion between the acrylic silicon emulsion particles A3 and the photo-semiconductor particles B3. As mentioned above, the porous sol particles C3 provide the function of rendering the coating agent multifunctional.

Particularly, the coating agent of the present embodiment possesses strong adhesive force by means of a binder function embodied by the acrylic silicon emulsion and the porous sol. As mentioned previously, the coating agent can be adsorbed directly on the coating surface. Hence, the primer coating liquid can be rendered unnecessary.

The above descriptions have described that the mean particle size of the photo-semiconductor particles B3 is the same as that of the porous sol particle C3. However, the photo-semiconductor particles B3 and the porous sol particles C3 may differ in mean particle size from each other, so long as these particles are smaller in mean particle size than the acrylic silicon emulsion particle A3. In order to prevent impairment of the photo-semiconductor particles B3, the porous sol particle C3 is preferably 1 to 1.5 times the size of the photo-semiconductor particle B3.

A fourth embodiment of the invention will now be described. As shown in Fig. 11, a photocatalyst composite H4 forming a coating agent (a photo-semiconductor coating liquid) of the fourth embodiment has a structure in which a plurality of coated composite photo-semiconductor particles B4 and porous sol particles (porous colloidal particles, second colloidal particles) C4 are adsorbed by the surface of an acrylic urethane emulsion particle (a first colloidal particle) A4. Specifically, the coating agent of the embodiment has a plurality of (specifically a "multitude of") photocatalyst composites H4, and the coating agent of the embodiment has the acrylic urethane emulsion particles A4, the coated composite photo-semiconductor particles B4, and the porous sol particles C4.

The acrylic urethane emulsion particles A4 have a mean particle size of 200 nm. Other colloidal particles may be employed in place of the acrylic urethane emulsion particles.

The coated composite photo-semiconductor particle (coated photo-semiconductor particle) B4 is formed from a photo-semiconductor particle B41 and apatite B42 covering the surface thereof. Specifically, the surface of the photo-semiconductor particle B41 is coated with the apatite B42 serving as an adsorbing-function substance, whereby the surface is formed as a composite. The coated composite photo-semiconductor particle B4 has a mean particle size of 50 nm and a specific surface area of 70 m²/g. Accordingly, the ratio of the acrylic urethane emulsion particle A4 to the coated composite photo-semiconductor particle B4 in terms of particle size is 4 to 1. The coated composite photo-semiconductor particle B4 serves as the previously-described coated photo-semiconductor particle.

The photo-semiconductor particle B41 is a semiconductor particle having a photocatalytic function, and, for example, titanium dioxide (more specifically, preferably anatase-type titanium dioxide) is used. Although titanium dioxide is used as the photo-semiconductor particles B41, any chemical, such as cadmium, canbe applied to the photo-semiconductor particles, so long as the chemical has a photocatalytic function.

The apatite B42 is a generic name for minerals having a composition of M₁₀(ZO₄)₆X₂. Among them, hydroxyapatite expressed by Ca₁₀(PO₄)₆(OH)₂ is known as a principal constituent of inorganic components, such as bones or teeth. The apatite B42 is known as having the ability to adsorbprotein. The apatite B42 is used as a filler for chromatography purpose and for separating and refining protein or a nucleic acid. The apatite also has the function for adsorbing viruses such as influenza viruses or bacteria such as coli bacteria. Once been adsorbed, the viruses will not depart from the apatite under ordinary conditions and remain permanently adsorbed. The apatite also has the ability to adsorb gases, such as ammonia or Noₓ. The apatite B42 preferably corresponds to at least a kind of calcium phosphate selected from among apatite hydroxide, apatite carbonate, apatite fluoride, and apatite hydroxy. Moreover, another porous calcium phosphate may also be employed.

The porous sol particles C4 are porous sol particles. For instance, silica sol is used as porous sol. The porous sol particle C4 has a mean particle size of 50 nm. Therefore, the coated composite photo-semiconductor particles B4 and the porous sol particles C4 are identical in mean particle size with each other. Individual coated composite photo-semiconductor particles B4 and individual porous sol particles C4 are substantially identical in particle size with each other. As a result, if the porous sol particles C4 are larger than the coated composite photo-semiconductor particles B4, the porous sol particles C4 may conceal the coated composite photo-semiconductor particles B4, thereby impairing the function of the coated composite photo-semiconductor particles B4. In the present embodiment, the coated composite photo-semiconductor particles B4 and the porous sol particles C4 are substantially identical in size with each other, and hence there is no such a potential risk. Moreover, the porous sol particles C4 provide an adhesive function when the coating agent adheres to a base material and also provide the function for assisting adhesion between the acrylic urethane emulsion particles A4 and the coated composite photo-semiconductor particles B4. In addition, the porous sol particles C4 provide the function of rendering the coating agent multifunctional. More specifically, when the porous sol particles C4 are silica sol, a self-cleaning function is provided. In the case of porous zinc oxide, the coating agent is imparted with an antibacterial function and a UV shielding function.

The acrylic urethane emulsion particles A4, the coated composite photo-semiconductor particles B4, and the porous sol particles C4 assume the foregoing sizes. Hence, the spherical surface area of the acrylic urethane emulsion particles A4 assumes a value of 502400 nm², and the spherical cross-sectional area of the coated composite photo-semiconductor particles B4 and that of the porous sol particles C4 assumes a value of 1962.5 nm². Theoretically, the surface of the acrylic urethane emulsion particles A4 can adsorb 256 coated composite photo-semiconductor particles B4 and porous sol particles C4 (502400÷1962.5).

In Fig. 11, in order to represent that the coated composite photo-semiconductor particles B4 and the porous sol particles C4 are identical in particle size, the diameter of the photo-semiconductor particle B41 is depicted as being smaller than that of the porous sol particle C4, in consideration of the thickness of the apatite B42. However, the thickness of the apatite B42 is very nominal, and hence the diameter of the photo-semiconductor particle 41 can be said to be substantially identical with that of the porous sol particle C4. Fig. 11 represents exaggerated presence of the apatite B42. However, the actual thickness of the apatite B42 is very nominal. Although the coated composite photo-semiconductor particles B4 and the porous sol particles C4 have been described as being identical in mean particle size, the photo-semiconductor particle B41 and the porous sol particle C4 may be made identical with each other.

A method for manufacturing the coating agent of the fourth embodiment will now be described. First, the photo-semiconductor particles B41 are coated with the apatite B42 as composites, thereby producing the coated composite photo-semiconductor particles B4. In this case, various methods, such as a sintering method and an aqueous solution method, can be used as the method for coating the apatite B42. In this case, according to a method using an aqueous solution, such as awetmethod, preparationof apatite involves consumption of a period of a week or more, thereby adding to costs. Sintering at high temperatures is usually indispensable for generating an apatite crystal. However, this method requires a large quantity of energy.

For these reasons, there is employed a technique for producing the apatite B42 on the surface of the photo-semiconductor particle B41 through a biomimetic material process; that is, a method based on a process for synthesizing an inorganic composition in vivo through use of a pseudo body fluid, wherein this method has recently been adopted as a method for synthesizing an artificial bone. Specifically, a composition is adjusted so as to precipitate OCP, and the photo-semiconductor particles B41 are immersed in a pseudo body fluid maintained at a temperature of 37°C, which is close to body temperature. Specifically, the photo-semiconductor particles are dispersed in a tank filled with a pseudo body fluid and held in water having a temperature of 37 to 40°C.

The OCP is a precursor appearing at the time of generation of apatite and is expressed by a structural formula of Ca₈H₂(PO₄)₆5H₂O. In addition to OCP, there may also be employed TCP or ACP. The pseudo body fluid contains 0.5 to 50 mM of Ca²⁺ and 1 to 20 mM of HPO₄²⁻. Specifically, the pseudo body fluid is adjusted by dissolving, in water, NaCl, NaHCO₃, KCl, K₂HPO₄•3H₂O, MgCl₂•6H₂O, CaCl₂, Na₂SO₄, or NaF. Preferably, pH is adjusted to a value of 7 to 8, particularly, a value of 7.4, through use of HCl or (CH₂CH)₃CNH₂ or the like. A preferable composition of the pseudo body fluid used in the present invention includes Na⁺ (120 to 160 mM) , K⁺ (1 to 20 mM) , Ca²⁺ (0.5 to 50 mM), Mg²⁺ (0.5 to 50 mM), Cl⁻ (80 to 200 mM), HCO³⁻ (0.5 to 30 mM), HPO₄²⁻ (1 to 20 mM), SO₄²⁻ (0.1 to 20 mM), and F⁻ (0 to 5 mM). If the concentration of the composition is lower than the foregoing concentration, generation of calcium phosphate takes much time. In contrast, if the concentration of the composition is higher than the foregoing concentration, generation of calcium phosphate arises abruptly, thereby posing difficulty in controlling the degree of porosity and a thickness of a film.

When the liquid in the tank is continuously agitated, minute OCP crystals are deposited on the surface of the photo-semiconductor particles B41 within an hour, thereby coating the surfaces of the photo-semiconductor particles B21. Subsequently, the OCP crystals are decomposed and converted into apatite.

The tank is then pulled up from the pseudo body fluid and left, whereupon the photo-semiconductor particles coated with apatite are precipitated, and supernatant liquid flows. After water has been poured into the tank, the water is drained. These operations are repeated several times. The sediment remaining in the tank is dried, whereby photo-semiconductor particles coated with apatite; i.e., powder of coated composite semiconductor particles, is obtained. The powder of coated composite semiconductor particles corresponds to the coated semiconductor particles. Here, the powder of coated composite semiconductor particles may sometimes also be called "powder of coated composite photo-semiconductor" or "coated composite photo-semiconductor powder."

In the fourth embodiment, a method based on a process for synthesizing an inorganic composition in vivo through use of a pseudo body fluid is employed as the method for coating the photo-semiconductor particles B41 with the apatite B42 to form a composite. As compared with other methods, the method can shorten a synthesis time considerably, thereby enabling an improvement in productivity. Particularly, apatite is produced within about 10 hours by way of OCP. Apatite crystal can be obtained within a considerably shorter period of time than in a case where apatite is produced directly.

There arises no deterioration in translucent characteristic, which would otherwise be caused by coating with the apatite B42 titanium dioxide acting as the photo-semiconductor particles B41. Further, the photocatalytic function of the photo-semiconductor particle B41 is not impaired. Since the photo-semiconductor particles are coated with the apatite B42, the substance fails to approach the surface of titanium dioxide, and therefore deterioration of the photocatalytic function does not arise. The estimated reason for this is that apatite is sparsely precipitated on the surface of the photo-semiconductor particles B41, thereby failing to conceal the entire surface of the photo-semiconductor particle.

An aqueous dispersion is prepared by uniformly dispersing into 875 grams of water 30 grams of powder consisting of coated composite semiconductor particles (coated photo-semiconductor particles) (a mean particle size of 50 nm and a specific surface area of 70 m²/g) , the particles being formed by producing the apatite B42 so as to coat the surface of the photo-semiconductor particles B41 (see Fig. 14 for a dispersed liquid manufacturing process).

Sixty grams of 20% silica sol solution consisting of silica sol particles serving as porous sol particles C4 is mixed into the aqueous dispersion, and the solution is dispersed until the solution becomes uniform, thereby preparing an aqueous mixture (see Fig. 14 for first colloidal solution mixing/dispersing processes). In this case, the silica sol solution corresponds to the first colloidal solution. The silica sol particles correspond to the previously-described "colloidal particles in the first colloidal solution."

Thirty five grams of acrylic urethane emulsion (a solid content of 42%) consisting of acrylic urethane emulsion particles having a mean particle size of 200 nm is further dispersed uniformly in the aqueous mixture (i.e., the aqueous mixture produced in the first mixing/dispersing step), thereby completing manufacture of 1000 grams of coating agent (see Fig. 14 for a second mixing/dispersing step). In this case, the acrylic urethane emulsion to be mixed corresponds to the second colloidal solution. Moreover, the acrylic urethane emulsion particles correspond to the previously-described "colloidal particles in a second colloidal solution." The aqueous mixture manufacturing process defined in the foregoing description and claims is constituted of the first and second mixing/dispersing steps.

The reason why powder formed from coated composite photo-semiconductor particles; that is, the coated composite photo-semiconductor powder, is set to 30 grams is that a concentration of 3% is achieved on the premise that the entire weight of the coating agent is set to 1000 grams.

In the process for manufacturing the coating agent of the fourth embodiment, coated photo-semiconductor powder is dispersed in water, and silica sol solution is mixed and dispersed into the aqueous dispersion. Subsequently, acrylic urethane emulsion is mixed and dispersed in the aqueous mixture. However, the process for dispersing coated photo-semiconductor powder, the process formixing and dispersing silica sol solution, and the process for mixing and dispersing acrylic urethane emulsion are arbitrary.

As in the case of the third embodiment, adsorption of the coated composite photo-semiconductor particles B4 and the porous sol particles (porous colloidal particles) C4 to the acrylic urethane emulsion particle A4 in the form of one to two layers is most preferable (Fig. 9 shows one layer of coated composite photo-semiconductor particles). A maximum of five layers is preferable. In other words, a preferable number of layers for the coated composite photo-semiconductor particles B4 and the porous sol particles C4 ranges from one to five or thereabouts. As a result of the photo-semiconductor particles and porous sol particles being adsorbed into one to five layers or thereabouts, the coated composite photo-semiconductor particles can sufficiently exhibit the photocatalytic function. Concurrently, the coated composite photo-semiconductor particles can attain capabilities of a coating agent or paint while maintaining a colloidal state without involvement of a charge of additives. As mentioned previously, in one layer 400 coated composite photo-semiconductor particles B4 and porous sol particles C4 are adsorbed. Therefore, in five layers 2000 coated composite photo-semiconductor particles B4 are adsorbed.

At the time of actual adsorption operation, the number of layers is not necessarily uniform. There may arise a phenomenon wherein two layers are formed in some areas, and one layer is formed in another area. For this reason, expressions "a group of layers-each layer consists of coated composite photo-semiconductor particles and porous colloidal particles (second colloidal particles) and the number of layers to be stacked ranges from one to five-are adsorbed on the surface of a colloidal particle"; "the coated composite photo-semiconductor particles and the porous colloidal particles (second colloidal particles) are adsorbed on the surface of the colloidal particle within the range from one to five layers"; and "a layer consisting of coated composite photo-semiconductor particles and porous colloidal particles (second colloidal particles) are adsorbed on the surface of a colloidal particle within the range from one to five layers" include the following cases. In one case, any of one to five layer is formed over the entire surface of one colloidal particle [e.g., one layer (or two, three, four, or five layers) is formed over the entire surface of one colloidal particle]. In another case, from among one to five layers a plurality of total numbers of layers [e.g., two layers are formed in one area on the surface of one colloidal particle, and one layer is formed in the remaining area of the same; or four layers are formed in one area on the surface of one colloidal particle, three layers are formed in another area of the same, and two layers are formed in the remaining area of the same] are formed over the entire surface of one colloidal particle.

A state in which "a group of layers-each layer consists of coated composite photo-semiconductor particles and porous colloidal particles (second colloidal particles) and the number of layers to be stacked ranges from one to two-are adsorbed on the surface of a colloidal particle {or this may also be taken as a state in which a layer consisting of coated photo-semiconductor particles and porous colloidal particles (second colloidal particles) is adsorbed on the surface of a colloidal surface within the range from one to two layers}"; or a state in which "a group of layers-each layer consists of coated composite photo-semiconductor particles and porous colloidal particles (second colloidal particles) and the number of layers to be stacked ranges from one to two-are adsorbed on the surface of a colloidal particle {or this may also be taken as a state in which a layer consisting of coated composite photo-semiconductor particles and porous colloidal particles (second colloidal particles) is adsorbed on the surface of a colloidal surface within the range from one to three layers}" can be said to be more preferable.

In relation to the foregoing manufacturing method, another colloid other than acrylic urethane emulsion may also be employed.

A method for using the coating agent of the embodiment manufactured in the manner mentioned above will now be described. The coating agent is used while being applied directly over a coating surface, such as a concrete surface or a wood surface, without use of a primer coating liquid. The coating agent is chiefly adsorbed by the coating surface by means of the function of the porous sol particles C4 in the coating agent.

According to the coating agent of the fourth embodiment formed in the manner as mentioned above, the photo-semiconductor particles B41 are coated with the apatite B42, thereby forming a composite. Hence, the apatite B42 enables an improvement in the capability to adsorb bacteria or organic substances. Further, the bacteria or organic substance adsorbed by the apatite B42 are decomposed by the photo-semiconductor particles B41, and therefore the ability to process bacteria or the like can be improved. The thus-adsorbed bacteria or the like are decomposed by the photo-semiconductor particles B41, and hence the adsorbing surface of the apatite B42 can be preferably prevented from being saturated by the adsorbed substance, thereby preventing deterioration of the adsorbing capability of the apatite B42.

Since the apatite B42 serves as a spacer, the photo-semiconductor particles B41 do not come into direct contact with particles of another base material or the like. Therefore, the catalytic action of the photocatalyst can prevent decomposition of the binder or base material. Therefore, the coating agent of the embodiment can be contained in organic resin. Further, the coating agent can be used for an organic substance, such as fibers, wood, or plastic.

The coating agent of the embodiment also yields the effect yielded by the coating agent of the third embodiment.

More specifically, the coated composite photo-semiconductor particles B4 can be efficiently exposed to light on the surface of the acrylic urethane emulsion particles A4, thereby exhibiting a stable photocatalytic function. Moreover, the coated composite photo-semiconductor particles B4 can wholly be exposed to light on the surface of the acrylic emulsion particle A4. Therefore, the coated composite photo-semiconductor particles B4 can be prevented from mutually hindering exposure, which would otherwise be caused when the coated composite photo-semiconductor particles B4 are dispersed. Therefore, an efficiency can be enhanced conspicuously. Accordingly, the capability of photocatalyst, such as a capability to decompose an organic substance, can be sufficiently exhibited even on a thin coating film.

Since the ratio of the acrylic urethane emulsion particle A4 to the coated composite photo-semiconductor particle B4 in terms of particle size is 20 to 1, a plurality of coated composite photo-semiconductor particles B4 can be adsorbed on the surface of the acrylic urethane emulsion particle A4. Therefore, a thin coating film of small volume can sufficiently exhibit the capability of photocatalyst, such as a capability to decompose an organic substance.

The content of the coated composite photo-semiconductor particles B4 assumes a weight ratio of 3% (30 grams/1000 grams). Since the content of coated composite photo-semiconductor particles B4 is low, there is no necessity for charging a large amount of additives, such as a thickener, to be used for maintaining a colloidal state, thereby inhibiting the additives from concealing the coated photo-semiconductor particles B4. Since the coated composite photo-semiconductor particles B4. are sufficiently exposed to light, the coated composite photo-semiconductor particles can sufficiently exhibit a photocatalytic function. Therefore, a thin coating film can sufficiently exhibit the capability of photocatalyst, such as a capability to decompose an organic substance.

The amount of acrylic urethane emulsion to be prescribed is also adjusted such that the coated composite photo-semiconductor particles are adsorbed to the acrylic urethane emulsion particle in one to two layers. Hence, a stable characteristic can be obtained as a coating agent.

As mentioned previously, the coating agent is formed such that the ratio of the acrylic urethane emulsion particle A4 to the coated composite photo-semiconductor particle B4 in terms of particle size is 4 to 1. Therefore, a large space can be formed around the coated composite photo-semiconductor particle B4. As a result, the coating agent can acquire a sufficient translucent characteristic and is provided with sufficient gas permeability and sufficient humidity conditioning characteristics. Therefore, the coating agent can be applied to a natural raw material, such as wood, which requires gas permeability, and humidity absorption and conditioning effects of a raw material can also be acquired.

Further, the porous sol particles C4 are adsorbed on the surface of the acrylic urethane emulsion particles A4. Hence, the porous sol particles provide an adhesive function when the coating agent adheres to a base material; that is, an coating surface, and also provide the function for assisting adhesion between the acrylic urethane emulsionparticlesA4 and the coated composite photo-semiconductor particles B4. As mentioned above, the porous sol particles C4 provide the function of rendering the coating agent multifunctional.

Particularly, the coating agent of the present embodiment possesses strong adhesive force by means of a binder function embodied by the acrylic urethane emulsion and the porous sol. As mentioned previously, the coating agent can be adsorbed directly on the coating surface. Hence, the primer coating liquid can be rendered unnecessary.

The above descriptions have described that the coated composite photo-semiconductor particles B4 is identical in particle size with the porous sol particle C4. However, the coated composite photo-semiconductor particles B4 and the porous sol particles C4 may differ in mean particle size from each other, so long as these particles are smaller than the mean particle size of the acrylic urethane emulsion particle A4. In order to prevent impairment of the function of the coated composite photo-semiconductor particles B4, the porous sol particle C4 is preferably 1 to 1.5 times the size of the coated composite photo-semiconductor particle B4.

A fifth embodiment of the invention will nowbe described. As will be described later, the fifth embodiment differs from the fourth embodiment in that acrylic ultrafine emulsion is used as the second colloidal particles and that acrylic emulsion is used as the first colloidal particles. In other respects; that is, configuration, operation, and effect, the fifth embodiment is essentially identical with the fourth embodiment, and explanations of overlapping portions will be omitted.

As shown in Fig. 12, a photocatalyst composite H5 forming a coating agent (a photo-semiconductor coating liquid) of the fifth embodiment has a structure in which a plurality of coated composite photo-semiconductor particles B5 and acrylic ultrafine emulsion particles (second colloidal particles) C5 are adsorbed by the surface of an acrylic emulsion particle (a first colloidal particle) A5. Specifically, the coating agent of the embodiment has a plurality of (specifically a "multitude of") photocatalyst composites H5, and the coating agent of the embodiment has the acrylic emulsion particles A5, the coated composite photo-semiconductor particles B5, and the acrylic ultrafine emulsion particles C5.

The acrylic emulsion particles A5 have a mean particle size of 500 nm.

The coated composite photo-semiconductor particle (coated photo-semiconductor particle) B5 has the same configuration as that of the coated composite photo-semiconductor particle of the fourth embodiment; that is, the coated composite photo-semiconductor particle is formed from a photo-semiconductor particle B51 and apatite B52 covering the surface thereof. Specifically, the surface of the photo-semiconductor particle B51 is coated with the apatite B52 serving as an adsorbing-function substance, whereby the surface is formed as a composite. The coated composite photo-semiconductor particle B5 has a mean particle size of 50 nm and a specific surface area of 70 m²/g. Accordingly, the ratio of the acrylic emulsion particleA5 to the coated composite photo-semiconductor particle B5 in terms of particle size is 10 to 1. The coated composite photo-semiconductor particle B5 serves as the previously-described coated photo-semiconductor particle.

The photo-semiconductor particle B51 is a semiconductor particle having a photocatalytic function, and, for example, titanium dioxide is used. Although titanium dioxide is used as the photo-semiconductor particles B51, any chemical, such as cadmium, canbe applied to the photo-semiconductor particles, so long as the chemical has a photocatalytic function.

The apatite B52 has the same configuration as that of the fourth embodiment, and repeated explanations thereof are omitted.

The acrylic ultrafine emulsion particle C5 has a mean particle size of 50 nm and a solid content of 40%. Therefore, the coated composite photo-semiconductor particle B5 and the acrylic ultrafine emulsion particle C5 are identical in mean particle size. An individual coated composite photo-semiconductor particle B5 and an individual acrylic ultrafine emulsion particle C5 are substantially identical in particle size. If the acrylic ultrafine emulsion particles C5 are larger than the coated composite photo-semiconductor particles B5, the acrylic ultrafine emulsion particles C5 may conceal the coated composite photo-semiconductor particles 85, thereby impairing the function of the coated composite photo-semiconductor particles B5. In the present embodiment, the coated composite photo-semiconductor particles B5 and the acrylic ultrafine emulsion particles C5 are substantially identical in size, and hence there is no such a potential risk. Moreover, the acrylic ultrafine emulsion particles C5 provide an adhesive function when the coating agent adheres to a base material and also provide a function for promoting adhesion between the acrylic emulsion particles A5 and the coated composite photo-semiconductor particles B5. In addition, the acrylic ultrafine emulsion particles C5 provide the function of rendering the coating agent multifunctional.

The acrylic emulsion particles A5, the coated composite photo-semiconductor particles B5, and the acrylic ultrafine emulsion particles C5 assume the foregoing sizes. Hence, the spherical surface area of the acrylic emulsion particles A5 assumes a value of 3140000 nm², and the spherical cross-sectional area of the coated composite photo-semiconductor particles B5 and that of the acrylic ultrafine emulsion particles C5 assume a value of 1962. 5 nm². Theoretically, the surface of the acrylic emulsion particles A5 can adsorb a total of 1600 coated composite photo-semiconductor particles B5 and acrylic ultrafine emulsion particles C5 (3140000÷1962.5).

In Fig. 12, in order to represent that the coated composite photo-semiconductor particles B5 and the acrylic ultrafine emulsion particles C5 are of identical particle size, the diameter of the photo-semiconductor particle B51 is depicted as being smaller than that of the acrylic ultrafine emulsion particles C5, in consideration of the thickness of the apatite B52. However, the thickness of the apatite B52 is very nominal, and hence the diameter of the photo-semiconductor particle B51 canbe said to be substantially identical with that of the acrylic ultrafine emulsion particles C5. Fig. 12 represents exaggerated presence of the apatite B52. However, the actual thickness of the apatite B52 is very nominal. Although the coated composite photo-semiconductor particles B5 and the acrylic ultrafine emulsion particles C5 have been described as being identical in particle size, the photo-semiconductor particle B51 and the acrylic ultrafine emulsion particles C5 may be made identical in mean particle size with each other.

Next, a method for manufacturing the coating agent of the fifth embodiment will be described. First, under the method described in connection with the fourth embodiment, the photo-semiconductor particle B51 is coated with the apatite B52 in advance, to thereby produce a composite. Fifteen grams of coated composite semiconductor powder consisting of coated compositesemiconductor particles (coated photo-semiconductor particles) (a mean particle size of 50 nm and a specific surface area of 70 m²/g), the particles being coated by producing the apatite B52 on the surface of the photo-semiconductor particle B51, is uniformly dispersed in 924 grams of water, thereby preparing an aqueous dispersion (see Fig. 14 for an aqueous dispersion manufacturing step).

Twenty-five grams of acrylic ultrafine emulsion consisting of the acrylic ultrafine emulsion particles C5 is mixed into the aqueous dispersion and dispersed, thereby preparing an aqueous mixture (see Fig. 14 for first mixing/dispersing processes). In this case, the acrylic ultrafine emulsion corresponds to the first colloidal solution. The acrylic ultrafine emulsion particles correspond to "colloidal particles in the first colloidal solution."

Thirty-six grams of acrylic emulsion (a mean particle size of 500 nm and a solid content of 45%) consisting of the acrylic emulsion particles A5 is mixed and dispersed in the aqueous mixture (i.e., the aqueous mixture produced in the first mixing/dispersing step), thereby completing manufacture of 1000 grams of photo-semiconductor coating agent (see Fig. 14 for a secondmixing/dispersing step). In this case, the acrylic emulsion to be mixed corresponds to the second colloidal solution. Moreover, the acrylic emulsion particles correspond to the previously-described "colloidal particles in a second colloidal solution." The aqueous mixture manufacturing process defined in the foregoing description and claims is constituted of the first and second mixing/dispersing steps.

The reason why the amount of powder consisting of coated composite photo-semiconductor particles; that is, the amount of coated composite photo-semiconductor powder, is set to 15 grams is that a concentration of 1.5% is achieved on the premise that the entire weight of coating agent is set to 1000 grams.

In the process for manufacturing the coating agent of the fifth embodiment, the coated composite photo-semiconductor powder is dispersed in water, and acrylic ultrafine emulsion is mixed and dispersed into the aqueous dispersion. Subsequently, acrylic emulsion is mixed and dispersed in the aqueousmixture. However, the process for dispersing the coated photo-semiconductor powder, the process for mixing and dispersing acrylic ultrafine emulsion, and the process for mixing and dispersing acrylic emulsion are arbitrary.

As in the case of the third and fourth embodiments, adsorption of the coated composite photo-semiconductor particles B5 and the acrylic ultrafine emulsion particles C5 to the acrylic emulsion particle A5 in the form of one to two layers is most preferable (Fig. 9 shows one layer of coated composite photo-semiconductor). A maximum of five layers is preferable. In other words, a preferable number of layers, each layer consisting of the coated composite photo-semiconductor particles B5 and the acrylic ultrafine emulsion particles C5, ranges from one to five or thereabouts. As a result of the number of layers being set to one to five layers or thereabouts, the coated composite photo-semiconductor particles can sufficiently exhibit the photocatalytic function. Concurrently, the layers can attain capabilities of a coating agent or paint while maintaining a colloidal state without involvement of a charge of additives. As mentioned previously, in one layer 400 coated composite photo-semiconductor particles B5 and acrylic ultrafine emulsion particles C5 are adsorbed. Therefore, in five layers 2000 coated composite photo-semiconductor particles B5 are adsorbed.

At the time of actual adsorption operation, the number of layers is not necessarily uniform. There may arise a phenomenon wherein two layers are formed in some areas, and one layer is formed in another area. For this reason, expressions "a group of layers-each layer consists of coated composite photo-semiconductor particles and second colloidal particles and the number of layers to be stacked ranges from one to five-are adsorbed on the surface of the first colloidal particle"; "the coated composite photo-semiconductor particles and the second colloidal particles are adsorbed on the surface of the first colloidal particle within the range from one to five layers"; and "a layer consisting of coated composite photo-semiconductor particles and the second colloidal particles is adsorbed on the surface of a first colloidal particle within the range from one to five layers" include the following cases. In one case, any of one to five layers is formed over the entire surface of one colloidal particle (the first colloidal particle) [e.g., one layer (ortwo, three, four, or five layers) is formed over the entire surface of one colloidal particle (the first colloidal particle). Inanothercase, among one to five layers a plurality of total numbers of layers [e.g., two layers are formed in one area on the surface of one colloidal particle (the first colloidal particle), and one layer is formed in the remaining area of the same; or four layers are formed in one area on the surface of one colloidal particle (the first colloidal particle), three layers are formed in another area of the same, and two layers are formed in the remaining area of the same] are formed over the entire surface of one colloidal particle.

A state in which "a group of layers-each layer consists of coated composite photo-semiconductor particles and second colloidal particles and the number of layers to be stacked ranges from one to two-are adsorbed on the surface of a first colloidal particle {or this may also be taken as a state in which a layer consisting of coated composite photo-semiconductor particles and second colloidal particles is adsorbed on the surface of the first colloidal surface within the range from one to two layers)"; or a state in which "a group of layers-each layer consists of coated composite photo-semiconductor particles and second colloidal particles and the number of layers to be stacked ranges from one to two-are adsorbed on the surface of the first colloidal particle (or this may also be taken as a state in which a layer consisting of coated composite photo-semiconductor particles and second colloidal particles is adsorbed on the surface of the first colloidal surface within the range from one to three layers}" can be said to be more preferable.

In relation to the foregoing manufacturing method, another colloid other than acrylic emulsionmay also be employed.

The method of usage and effects of the coating agent of the embodiment are identical with those described in connection with the fourth embodiment, and hence their repeated explanations are omitted.

A sixth embodiment of the invention will now be described. As shown in Fig. 13, a photocatalyst composite H6 forming a coating agent (a photo-semiconductor coating liquid) of the sixth embodiment has a structure in which a plurality of coated composite photo-semiconductor particles (coated photo-semiconductor particles) B6, photo-semiconductor particles C6, and silica-sol particles (second colloidal particles) D6 are adsorbedbythe surface of a silica sol particle (a first colloidal particles) A6. Specifically, the coating agent of the embodiment has a plurality of (specifically a "multitude of") photocatalyst composites H6, and the coating agent of the embodiment is constituted of the silica sol particles A6, the coated composite photo-semiconductor particles B6, the photo-semiconductor particles C6, and the silica sol particles D6.

The silica sol particles A6 have a mean particle size of 500 nm. Other porous sol particles or other colloidal particles may be employed in place of the silica sol particles.

The coated composite photo-semiconductor particle (coated photo-semiconductor particle) B6 is formed from a photo-semiconductor particle B61 and apatite B62 covering the surface thereof. Specifically, the surface of the photo-semiconductor particle B61 is coated with the apatite B62 serving as an adsorbing-function substance, whereby the surface is formed as a composite. The coated composite photo-semiconductor particle B6 has a mean particle size of 10 nm and a specific gravity of about 1.7. Accordingly, the ratio of the silica sol particle A6 to the coated composite photo-semiconductor particle B6 in terms of particle size is 50 to 1. The coated composite photo-semiconductor particle B6 serves as the previously-described coated photo-semiconductor particle. The coated composite photo-semiconductor particle B6 is identical in configuration with the coated composite photo-semiconductor particle B4 of the fourth embodiment, and hence its detailed explanation is omitted.

The photo-semiconductor particle C6 is anatase-type titanium oxide. The photo-semiconductor particle C6 has a mean particle size of 10 nm and a specific gravity of about 1.7. The photo-semiconductor particle C6 is not coated with another substance. Therefore, the ratio of the particle size of the silica sol particle A6 to the particle size of the photo-semiconductor particle C6 assumes a value of 50 to 1. Here, the photo-semiconductor particle C6 may also be another semiconductor particle having a photocatalytic function rather than anatase-type titanium oxide.

The silica sol particle D6 has a mean particle size of 10 nm. Therefore, the silica sol particles D6, the coated composite photo-semiconductor particles B6, and the photo-semiconductor particles C6 are identical in particle size. If the silica sol particle D6 is larger than the coated composite photo-semiconductor particle B6 and the photo-semiconductor particle C6, the silica sol particles D6 may conceal the coated composite photo-semiconductor particles B6 and the photo-semiconductor particles C6, thereby impairing the function of the coated composite photo-semiconductor particles B6 and that of the photo-semiconductor particles C6. In the present embodiment, the silica sol particles D6, the coated composite photo-semiconductor particles B6, and the photo-semiconductor particles C6 are substantially identical in size with each other, and hence there is no such potential risk. Moreover, the silica sol particles D6 provide an adhesive function when the coating agent adheres to a base material and also provide a function for promoting adhesion between the silica sol particles A6 and the coated composite photo-semiconductor particles B6 and between the silica sol particles A6 and the photo-semiconductor particles C6. The silica sol particles D6 can impart a self-cleaning function to the coating agent. Here, the self-cleaning function is a function which utilizes a hydrophilic characteristic of the silica sol and prevents stains from remaining on the surface coated with the coating agent as a result of NOₓ decomposed by the photo-semiconductor particles being flushed with water. Sol particles are not limited to the silica sol particles D6 but may be another porous sol particle. For instance, porous zinc oxide particles may be mentioned as another porous sol particle. In the case of the porous zinc oxide particles, an antibacterial function and a UV-ray shielding function can be achieved.

The silica sol particles A6, the coated composite photo-semiconductor particles B6, the photo-semiconductor particles C6, and the silica sol particles D6 have the foregoing sizes. Hence, the spherical surface area of the silica sol particle A6 assumes a value of 785000 nm², and the spherical cross-sectional area of the coated composite photo-semiconductor particle B6, that of the photo-semiconductor particle C6, and that of the silica sol particle D6 assume a value of 78.5 nm². Theoretically, the surface of the silica sol particle A6 can adsorb a total of 10000 coated composite photo-semiconductor particles B6, photo-semiconductor particles C6, and silica sol particles D6 (785000÷78.5).

In Fig. 13, in order to represent that the coated composite photo-semiconductor particles B6, the photo-semiconductor particles C6, and the silica sol particles D6 are identical in particle size, the diameter of the photo-semiconductor particle B61 is expressed as being smaller than that of the photo-semiconductor particle C6 and that of the silica sol particles D6, in consideration of the thickness of the apatite B62. However, the thickness of the apatite B62 is very nominal, and hence the diameter of the photo-semiconductor particle B61 can be said to be substantially identical with that of the photo-semiconductor particle C6 and that of the silica sol particle D6. Fig. 13 represents exaggerated presence of the apatite B62. However, the actual thickness of the apatite B62 is very nominal. Although the coated composite photo-semiconductor particles B6, the photo-semiconductor particles C6, and the silica sol particles D6 have been described as being identical in mean particle size, the photo-semiconductor particles B61 may be made identical in mean particle size with the photo-semiconductor particles C6 and the silica sol particles D6.

A method for manufacturing the coating agent of the sixth embodiment will now be described.

First, under the method described in connection with the fourth embodiment, the photo-semiconductor particles B61 are coated with the apatite B62, thereby forming a composite. An aqueous dispersion is prepared by uniformly dispersing 0.5 grams of powder consisting of the coated composite semiconductor particles B6 (a mean particle size of 10 nm and a specific gravity of about 1.7), the particles being formed by producing the apatite B62 on the surface of the photo-semiconductor particles B61, and powder of anatase-type titanium oxide (a mean particle size of 10 nm and a specific gravity of about 1.7) into 157 grams of water (see Fig. 14 for an aqueous dispersion manufacturing step).

Two grams of silica sol solution consisting of the silica sol particles D6 (a mean particle size of 10 nm, a specific gravity of about 1.7, and a solid content of 20%) is mixed into the aqueous dispersion and dispersed, thereby preparing an aqueous mixture (see Fig. 14 for the first mixing/dispersing processes). In this case, the silica sol solution to be mixed corresponds to the first colloidal solution. The silica sol particles D6 correspond to "colloidal particles in the first colloidal solution."

Forty grams of silica sol solution consisting of the silica sol particles A6 (a mean particle size of 500 nm, the specific gravity of about 1. 7, and a solid content of 20%) is mixed into the aqueous mixture (i.e., the aqueous mixture produced in the first mixing/dispersing step) and dispersed, thereby producing 200 grams of coating liquid (see Fig. 14 for the second mixing/dispersing step). In this case, the silica sol solution corresponds to the second colloidal solution. Moreover, the silica sol particles A6 correspond to the "colloidal particles in the first colloidal solution."

The process for mixing and dispersing silica sol consisting of the silica sol particles D6 (i.e., the first mixing/dispersing process) and the process for mixing and dispersing the silica sol consisting of the silica sol particles A6 (i.e., the second mixing/dispersing process) constitute the aqueous mixture manufacturing processes in the foregoing descriptions and claims.

The reason why the amount of powder consisting of the coated composite photo-semiconductor particles; i.e., the amount of coated composite photo-semiconductor powder, is set to 0.5 grams and the reason why the amount of anatase-type titanium oxide is set to 0.5 grams is that a concentration of 0.5 (1/200)% is achieved on the premise that the entire weight of the coating agent is set to 200 grams.

In the process for manufacturing the coating agent of the sixth embodiment, coated photo-semiconductor powder and anatase-type titanium oxide powder are dispersed in water, and silica sol solution having the silica sol particles D6 is mixed and dispersed into the aqueous dispersion. Subsequently, silica sol solution having silica sol particles A6 is mixed and dispersed in the aqueous mixture. However, the process for dispersing coated photo-semiconductor particle powder and the anatase-type titanium oxide, the process for mixing and dispersing silica sol solution having the silica sol particles D6, and the process for mixing and dispersing silica sol solution having the silica sol particles A6 are performed in arbitrary sequence.

Adsorption of the coated composite photo-semiconductor B6, the photo-semiconductor particles C6, and the silica sol particles D6 to the silica sol particle A6 in the form of one to two layers is most preferable (Fig. 13 shows one layer of coated composite photo-semiconductor particles). A maximum of five layers is preferable. In other words, a preferable number of layers, each layer consisting of the coated composite photo-semiconductor particles B6, the photo-semiconductor particles C6, and the silica sol particles CD6, ranges from one to five or thereabouts. As a result the layers being stacked into one to five layers or thereabouts, the photocatalytic function of the coated composite photo-semiconductor particles and that of the photo-semiconductor particles can be sufficiently exhibited. Concurrently, the layers can attain capabilities of a coating agent or paint while maintaining a colloidal state without involvement of a charge of additives.

At the time of actual adsorption operation, the number of layers is not necessarily uniform. There may arise a phenomenon wherein two layers are formed in some areas, and one layer is formed in another area. For this reason, expressions "a group of layers-each layer consists of coated composite photo-semiconductor particles, photo-semiconductor particles, and porous colloidal particles (second colloidal particles) and the number of layers to be stacked ranges from one to five are adsorbedon the surface of a colloidal particle"; "the coated composite photo-semiconductor particles, the photo-semiconductor particles, and the porous colloidal particles (second colloidal particles) are adsorbed on the surface of the colloidal particle within the range from one to five layers"; and "a layer consisting of the coated composite photo-semiconductor particles, the photo-semiconductor particles, and the porous colloidal particles (second colloidal particles) are adsorbed on the surface of a colloidal particle within the range from one to five layers" include the following cases. In one case, any of one to five layers is formed over the entire surface of one colloidal particle [e.g., one layer (or two, three, four, or five layers) is formed over the entire surface of one colloidal particle]. In another case, among one to five layers a plurality of total numbers of layers [e.g., two layers are formed in one area on the surface of one colloidal particle, and one layer is formed in the remaining area of the same; or four layers are formed in one area on the surface of one colloidal particle, three layers are formed in another area of the same, and two layers are formed in the remaining area of the same] are formed over the entire surface of one colloidal surface.

A state in which "a group of layers-each layer consists of coated composite photo-semiconductor particles, photo-semiconductor particles, and porous colloidal particles (second colloidal particles) and the number of layers to be stacked ranges from one to two-are adsorbed on the surface of a colloidal particle {or this may also be taken as a state in which a layer consisting of coated composite photo-semiconductor particles, photo-semiconductor particles, and porous colloidal particles (second colloidal particles) is adsorbed on the surface of a colloidal surface within the range from one to two layers}"; or a state in which "a group of layers-each layer consists of coated composite photo-semiconductor particles, photo-semiconductor particles, and porous colloidal particles (second colloidal particles) and the number of layers to be stacked ranges from one to two-are adsorbed on the surface of a colloidal particle {or this may also be taken as a state in which a layer consisting of coated composite photo-semiconductor particles, photo-semiconductor particles, and porous colloidal particles (second colloidal particles) is adsorbed on the surface of a colloidal surface within the range from one to three layers}" can be said to be more preferable.

A method for using the coating agent of the embodiment formed in the foregoing manner will now be described. On the occasion of use of the coating agent of the sixth embodiment, a primer coating liquid, particularly an inorganic primer coating liquid, is used. The inorganic primer coating liquid includes a primer coating liquid for forming a silica sol/gel film. After a primer layer has been formed by applying the inorganic primer coating liquid, a coating agent of the embodiment is applied over the primer layer.

According to the coating liquid of the sixth embodiment formed in the manner as mentioned above, the photo-semiconductor particles B61 are coated with the apatite B62, thereby forming a composite. Hence, the apatite B62 enables an improvement in the capability to adsorb bacteria or organic substances. Further, the bacteria or organic substance adsorbed by the apatite B62 are decomposed by the photo-semiconductor particles B61, and therefore the ability to process bacteria or the like can be improved. The thus-adsorbed bacteria or the like are decomposed by the photo-semiconductor particles B61, and hence the adsorbing surface of the apatite B62 can be preferably prevented from being saturated by the adsorbed substance, thereby preventing deterioration of the adsorbing capability of the apatite B62.

The coating agent of the embodiment also yields the effects yielded by the coating agents of the third to fifth embodiments. More specifically, the coated composite photo-semiconductor particles B6 can be efficiently exposed to light on the surface of the silica sol particles A6, thereby exhibiting a stable photocatalytic function. Moreover, the coated composite photo-semiconductor particles B6 can wholly be exposed to light on the surface of the silica sol particle A6. Therefore, the coated composite photo-semiconductor particles B6 can be prevented from mutually hindering exposure, which would otherwise be caused when the coated composite photo-semiconductor particles B6 are dispersed. Therefore, efficiency can be enhanced conspicuously. Accordingly, even a thin coating film can sufficiently exhibit the capability of photocatalyst, such as a capability to decompose an organic substance.

The coating agent of the embodiment also has the photo-semiconductor particles C6 which are not coated with apatite. Hence, a photocatalytic function of the photo-semiconductor particles can be achieved sufficiently. Hence, even a thin coating film can sufficiently exhibit the capability of the photocatalyst, such as the capability to decompose an organic substance.

Since the ratio of the silica sol particles A6 to the coated composite photo-semiconductor particle B6, the photo-semiconductor particles C6, and the silica sol particles D6 in terms of particle size is 50 to 1, a plurality of coated composite photo-semiconductor particles B6, the photo-semiconductor particles C6, and the silica sol particles D6 can be adsorbed on the surface of the silica sol particle A6. Therefore, a thin coating film of small volume can sufficiently exhibit the capability of photocatalyst, such as a capability to decompose an organic substance.

The total content of the coated composite photo-semiconductor particles B6 and the photo-semiconductor particles C6 assumes a weight ratio of 0.5%. Since the total content of the coated composite photo-semiconductor particles B6 and the photo-semiconductor particles C6 is low, there is no necessity for charging a large amount of additives, such as a thickener, to be used for maintaining a colloidal state, thereby inhibiting the additives from concealing the coated composite photo-semiconductor particles B6 and the photo-semiconductor particles C6. Since the coated composite photo-semiconductor particles B6 and the photo-semiconductor particles C6 are sufficiently exposed to light, a photocatalytic function can be sufficiently exhibited. Therefore, a thin coating film can sufficiently exhibit the capability of photocatalyst, such as a capability to decompose an organic substance.

The amount of silica sol to be employed is also adjusted such that the coated composite photo-semiconductor particles, the photo-semiconductor particles, and silica sol are adsorbed to the silica sol particle in one to two layers. Hence, a stable characteristic of a coating agent can be obtained.

As mentioned previously, the coating agent is formed such that the ratio of the silica sol particles A6 to the coated composite photo-semiconductor particle B6, the photo-semiconductor particles C6, and the silica sol particles D6 in terms of particle size is 20 to 1. Therefore, a large space can be formed around the coated composite photo-semiconductor particles B6 and the photo-semiconductor particles C6. As a result, the coating agent can acquire a sufficient translucent characteristic and is provided with sufficient gas permeability and sufficient humidity conditioning characteristics. Therefore, the coating agent can be applied to a natural raw material, such as wood, which requires gas permeability, and humidity absorption and conditioning effects of a raw material can also be acquired.

Further, the silica sol particles D6 are adsorbed on the surface of the silica sol particles A6. Hence, the coating agent provide an adhesive function when the coating agent adheres to a base material; that is, a coating surface, and also provides a function for promoting adhesion between the silica sol particles A6 and the coated composite photo-semiconductor particles B6 and adhesion between the silica sol particles A6 and the photo-semiconductor particles C6.

Particularly, the coating agent of the present embodiment possesses strong adhesive force by means of a binder function embodiedby the two kinds of silica sol. As mentioned previously, the coating agent can be adsorbed directly on the coating surface. Hence, the primer coating liquid can be rendered unnecessary.

The above descriptions have described that the coated composite photo-semiconductor particles B6, the photo-semiconductor particles C6, and the silica sol D6 are identical in mean particle size. However, the coated composite photo-semiconductor particles B6, the photo-semiconductor particles C6, and the silica sol D6 may differ in mean particle size, so long as these particles are smaller than the silica sol particles A6. In order to prevent impairment of the function of the coated composite photo-semiconductor particles B6 and the function of the photo-semiconductor particles C6, the silica sol particle D6 is preferably 1 to 1.5 times the size of the coated composite photo-semiconductor particle B6 and the photo-semiconductor particle C6.

The descriptions of the sixth embodiment have described that the coating agent has the silica sol particles A6, the coated composite photo-semiconductor particles B6, the photo-semiconductor particles C6, and the silica sol particles D6. However, the coating agent is not limited to this constitution. The silica sol particles D6 may be omitted. In this case, the process for mixing silica sol having a mean particle size of 10 nm is omitted from the foregoing manufacturing processes.

In the third to sixth embodiments, the ratio of the particle size of the first colloidal particle to that of the photo-semiconductor particle (or the coated composite photo-semiconductor particle) has been described as 10:1 and 20: 1. However, the only requirement is that the first colloidal particle be one time or more the size of the photo-semiconductor particle (or the coated composite photo-semiconductor particle). Moreover, the ratio of the particle size of the first colloidal particle to that of the second colloidal particle has been described as 10:1 and 20:1. The only requirement is that the first colloidal particles be one time or more the size of the second colloidal particle.

Here, even when the first colloidal particle is the same size as the photo-semiconductor particle (or the coated composite photo-semiconductor particle) and the second colloidal particle, there is obtained a spherical surface area (4πr²)/a spherical cross-sectional area (πr²)=4. A total of four photo-semiconductor particles (or coated composite photo-semiconductor particles) and the second colloidal particles can be adsorbed around the first colloidal particle. Hence, many photo-semiconductor particles (or coated composite photo-semiconductor particles) and second colloidal particles can be said to be adsorbed. A case where the first colloidal particle is one time or more the size of the photo-semiconductor particle (or the coated composite photo-semiconductor particle) can be said to be more preferable. Further, a case where the first colloidal particle is twice or more the size of the photo-semiconductor particle (or the coated composite photo-semiconductorparticle) canbesaidtobemorepreferable. Furthermore, a case where the first colloidal particle is ten times or more the size of the photo-semiconductor particle (or the coated composite photo-semiconductor particle) can be said to be much more preferable. Moreover, the first colloidal particle may also be set so as to be 1 to 1000 times the size of the photo-semiconductor particle (or the coated composite photo-semiconductor particle). Even in relation to the second colloidal particle, a case where the first colloidal particle is one time or more the size of the second colloidal particle can be said to be more preferable. Further, a case where the first colloidal particle is twice or more the size of the second colloidal particle can be said to be more preferable. Furthermore, a case where the first colloidal particle is ten times or more the size of the second colloidal particle can be said to be much more preferable. Moreover, the first colloidal particle may also be set so as to be 1 to 1000 times the size of the second colloidal particle.

Although the concentration of the photo-semiconductor particles and that of the coated composite photo-semiconductor particles have been described as assuming a value of 5% and a value of 2.5%, respectively, the only requirement is that the concentrations range from 0.1% to 10%.

The respective embodiments illustrate examples in which a photocatalyst composite is used as a coating agent. In the case of a paint, the only requirement is to mix respective coating agents with pigment, as required.

The present invention is not limited solely to the embodiments. For instance, the photo-semiconductor particles include all particles having the function of photo-semiconductor. In addition to the photo-semiconductor particles, particles having a photocatalytic function may also be employed. Particularly, "photocatalytic function particles" may be used in lieu of "photo-semiconductor particles," and "coated photocatalytic function particles" may be employed in place of "coated photo-semiconductor particles." The photocatalytic function particles signify particles having photocatalytic functions.

In the respective embodiments, the photocatalyst composite is taken as being mixed with a coating agent or paint. However, substances into which the photocatalyst composite is mixed are not limited to these substances and include all substances, such as an antibacterial agent, a rust-preventive agent, or a depurator, which enables mixing of the photocatalyst composite.

Fig. 9 illustrates a state in which the photo-semiconductor particles B3 are adsorbed in the form of a monolayer, and Fig. 11 shows a state in which the coated composite photo-semiconductor particles B4 are adsorbed in the formof amonolayer. Figs. 9 and 11 showideal states of monolayer adsorption. Figs. 9 and 11 schematically show a photocatalytic composite or coated composite photo-semiconductor particles. In reality, the number of particles adsorbed on the surface of a colloidal particle is not limited to those shown in Figs. 9, 11, and 12. Further, in contrast with the cases as shown in Figs. 9, 11, and 12, in reality particles are not necessarily adsorbed without gaps.

In the respective embodiments, colloidal particles having one mean particle size are contained. However, a plurality of kinds of colloidal particles of different mean particle sizes may be contained. Particularly, the first colloidal particles may be formed from a plurality of kinds of colloidal particles having different mean particle sizes. As a result, colloidal particles having smaller diameters burrow their way into interstices located around colloidal particles having larger diameters, thereby bridging spaces to thereby enhance density of the coating agent.

In the third through sixth embodiments, acrylic silicon emulsion, acrylic urethane emulsion, acrylic emulsion, and the like have been described as examples of colloids. However, other colloids may also be employed.

Moreover, the third and fourth embodiments have been described by taking porous sol particles as examples of the second colloidal particles. The fifth embodiment has also been described by taking acrylic ultrafine emulsion particles as examples of the second colloidal particles. However, other colloidal particles may also be employed. In addition, apatite has been described as an example of the adsorptive function substance. However, other substances; i.e., other substances having adsorptive functions, may also be employed.

### Industrial Applicability

According to the coating agent based on the present invention and the coating agent manufactured by a coating agent manufacturingmethodbasedon the present invention, the coating agent has first colloidal particles and photo-semiconductor particles and/or coated photo-semiconductor particles. Hence, the photo-semiconductor particles and/or the coated photo-semiconductor particles remain adsorbed on the surface of the colloidal particle. Hence, the photo-semiconductor particles and/or the coated photo-semiconductor particles can be efficiently exposed to light on the surface of the colloidal particle, thereby stably exhibiting a photocatalytic function. Moreover, the photo-semiconductor particles and/or the coated photo-semiconductor particles can be wholly exposed to light on the surface of the colloidal particle. Hence, the photo-semiconductor particles and/or the coated photo-semiconductor particles do not mutually interfere with exposure, which would otherwise be caused when the photo-semiconductor particles and/or the coated photo-semiconductor particles are dispersed. Therefore, efficiency can be considerably enhanced. Accordingly, a thin coating film of small volume can sufficiently exhibit the capability of the photocatalyst; that is, the capability to decompose an organic substance or the like.

Particularly, when there are used coated photo-semiconductor particles formed by coating the photo-semiconductor particles with an adsorptive function substance, the photo-semiconductor particles are coated with the adsorptive function substance, and hence the capability to adsorb a harmful substance can be enhanced. The photo-semiconductor particles do not come into direct contact with other particles of a base material or the like, and hence a binder or abase material can be prevented frombeing decomposed by means of catalytic function of the photo-semiconductor.

Particularly, when the coating agent has the second colloidal particles or colloidal particles in the first colloidal solution (hereinafter simply called "second colloidal particles or the like"), the second colloidal particles or the like are additionally adsorbed on the surface of the first colloidal particle. Therefore, the coating agent has the function of the second colloidal particle or the like, and hence an attempt can be made to render the coating agent multifunctional.

When the first colloidal particles or the like are one time or more the size of the photo-semiconductor particles or the like, a plurality of the photo-semiconductor particles or the like can be adsorbed on the surface of the colloidal particle. Therefore, the surface area which enables effective exhibition of the photocatalytic function can be made very large at even a small volume. Hence, even a thin coating film of small volume can sufficiently exhibit the capability of the photocatalyst, such as the capability to decompose an organic substance or the like.

When the first colloidal particle or the like is one time or more the size of the second colloidal particle, a large number of second colloidal particles can also be adsorbed on the surface of the first colloidal particle or the like, thereby enabling an attempt to sufficiently render the second colloidal particles or the like multifunctional.

When the content of the photo-semiconductor particles in the entire weight of the coating agent is set to a weight ratio of 0.1 to 10%; i.e., the content of the photo-semiconductor particles is suppressed to a low level. Therefore, there is no necessity for charging large amounts of additives such as thickeners for maintaining a colloidal state. Hence, the photocatalytic semiconductor particles can be prevented from being concealed by the additives. Consequently, the photocatalyst composite is sufficiently exposed to light, and hence the photocatalyst composite can sufficiently exhibit a photocatalytic function. Hence, even a thin coating film can sufficiently exhibit the capability of the photocatalyst, such as the capability to decompose an organic substance or the like.

When the ratio of the particle size of the photo-semiconductor particle to the particle size of the second colloidal particle ranges from 1 to 1.5 times, the photo-semiconductor particle is identical in particle size with or close in particle size to the second colloidal particle or the like. Therefore, the function of the photo-semiconductor and that of the second colloidal particle or the like can be exhibited well with a superior balance.

When a group of layers-each layer consists of the photo-semiconductor particles and the second colloidal particles or the like and the number of layers to be stacked ranges from one to five layers-are adsorbed on the surface of the first colloidal particle or the like, the photocatalytic function of the photo-semiconductor particle or the like can be exhibited sufficiently. Concurrently, the layers can attain the function of a coating agent or paint while the colloidal state is maintained without involvement of a charge of additives or the like.

## Claims

1. A coating agent comprising:
colloidal particles; and
photo-semiconductor particles.

2. The coating agent according to claim 1, wherein said colloidal particles have a particle size which is one time or more the particle size of said photo-semiconductor particle.

3. The coating agent according to claim 1 or 2, wherein the content of saidphoto-semiconductor particles in said entire coating agent is set to a weight ratio of 0.1% to 10%.

4. The coating agent according to claim 1 or 2 or 3, wherein said photo-semiconductor particles are adsorbed on the surface of the said colloidal particle within the range of one to five layers.

5. A coating agent comprising:
colloidal particles; and
coated photo-semiconductor particles formed by coating photo-semiconductor particles with an adsorptive function substance.

6. The coating agent according to claim 5, wherein the content of said coated photo-semiconductor particles in said entire coating agent is set to a weight ratio of 0.1 to 10%.

7. A coating agent comprising:
colloidal particles;
coated photo-semiconductor particles formed by coating photo-semiconductor particles with an adsorptive function substance; and
photo-semiconductor particles.

8. The coating agent according to claim 7, wherein said colloidal particles have a particle size which is one time or more the particle size of said photo-semiconductor particle.

9. The coating agent according to claim 7 or 8, wherein a total content of said coated photo-semiconductor particles and the photo-semiconductor particles in said entire coating agent is set to a weight ratio of 0.1 to 10%.

10. The coating agent according to claim 5 or 6 or 7 or 8 or 9, wherein said adsorptive function substance is porous calcium phosphate.

11. The coating agent according to claim 10, wherein said porous calcium phosphate is at least one kind of calcium phosphate selected from the group consisting of apatite hydroxide, apatite carbonate, and apatite fluoride.

12. The coating agent according to claim 10 or 11, wherein said porous calcium phosphate covering said photo-semiconductor particles is embodiedbymeans of immersing photo-semiconductor particles in a pseudo body fluid to coat the surface of said photo-semiconductor particles with porous calcium phosphate.

13. The coating agent according to claim 5 or 6 or 7 or 8 or 9 or 10 or 11 or 12, wherein said colloidal particles have a particle size which is one time or more the particle size of said coated photo-semiconductor particles.

14. The coating agent according to claim 5 or 6 or 7 or 8 or 9 or 10 or 11 or 12 or 13, wherein said coated photo-semiconductor particles are adsorbed on the surface of the said colloidal particle within the range of one to five layers.

15. The coating agent according to claim 1 or 2 or 3 or 4 or 5 or 6 or 7 or 8 or 9 or 10 or 11 or 12 or 13 or 14, wherein said coating agent contains said colloidal particles having different particle sizes.

16. The coating agent according to claim 1 or 2 or 3 or 4 or 5 or 6 or 7 or 8 or 9 or 10 or 11 or 12 or 13 or 14 or 15, wherein said colloidal particles include at least one of fluorine emulsion particles, acrylic emulsion particles, acrylic silicon emulsion particles, and acrylic urethane emulsion particles.

17. A coating agent comprising:
first colloidal particles;
photo-semiconductor particles having a particle size equal to or smaller than the particle size of said first colloidal particles; and
second colloidal particles which are colloidal particles having a particle size equal to or smaller than the particle size of said first colloidal particles.

18. The coating agent according to claim 17, wherein said second colloidal particles are porous colloidal particles.

19. The coating agent according to claim 18, wherein said porous colloidal particles are porous sol particles.

20. The coating agent according to claim 17 or 18 or 19, wherein the content of said photo-semiconductor particles in said entire coating agent is set to a weight ratio of 0.1 to 10%.

21. The coating agent according to claim 17 or 18 or 19 or 20, wherein the particle size of said second colloidal particle is 1 to 1.5 times as large as that of said photo-semiconductor particle.

22. The coating agent according to claim 17 or 18 or 19 or 20 or 21, wherein a layer formed from saidphoto-semiconductor particles and said second colloidal particles, the number of said layers to be stacked ranging from 1 to 5 layers, is adsorbed on the surface of said first colloidal particle.

23. A coating agent comprising:
first colloidal particles;
coated photo-semiconductor particles having a particle size equal to or smaller than the particle size of said first colloidal particles and being embodied by coating photo-semiconductor particles with an adsorptive function substance; and
second colloidal particles which are colloidal particles having a particle size equal to or smaller than the particle size of said first colloidal particle.

24. The coating agent according to claim 23, wherein the content of said coated photo-semiconductor particles in said entire coating agent is set to a weight ratio of 0.1 to 10%.

25. The coating agent according to claim 23 or 24, wherein the particle size of said second colloidal particle is 1 to 1.5 times as large as the particle size of said coated photo-semiconductor particle.

26. The coating agent according to claim 23 or 24 or 25, wherein a layer formed from said coated photo-semiconductor particles and said second colloidal particles, the number of said layers to be stacked ranging from 1 to 5 layers, is adsorbed on the surface of said first colloidal particle.

27. A coating agent comprising:
first colloidal particles;
coated photo-semiconductor particles having a particle size equal to or smaller than the particle size of said first colloidal particles and being embodied by coating photo-semiconductor particles with an adsorptive function substance;
photo-semiconductor particles having a particle size equal to or smaller than the particle size of said first colloidal particle; and
second colloidal particles which are colloidal particles having a particle size equal to or smaller than the particle size of said first colloidal particle.

28. The coating agent according to claim 27, wherein a total content of said coated photo-semiconductor particles and said photo-semiconductor particles in said entire coating agent is set to a weight ratio of 0.1 to 10%.

29. The coating agent according to claim 27 or 28, wherein the particle size of said second colloidal particle is 1 to 1.5 times as large as the particle size of said coated photo-semiconductor particle and the particle size of said photo-semiconductor particles.

30. The coating agent according to claim 27 or 28 or 29, wherein a layer formed from said coated photo-semiconductor particles, said photo-semiconductor particles, andsaidsecond colloidal particles, the number of said layers to be stacked ranging from 1 to 5 layers, is adsorbed on the surface of said first colloidal particle.

31. The coating agent according to claim 23 or 24 or 25 or 26 or 27 or 28 or 29 or 30, wherein said adsorptive function substance is porous calcium phosphate.

32. The coating agent according to claim 31, wherein said porous calcium phosphate is at least one kind of calcium phosphate selected from the group consisting of apatite hydroxide, apatite carbonate, and apatite fluoride.

33. The coating agent according to claim 31 or 32, wherein said porous calcium phosphate covering said photo-semiconductorparticles is embodiedbymeans of immersing photo-semiconductor particles in a pseudo body fluid to coat the surface of said photo-semiconductor particles with porous calcium phosphate.

34. The coating agent according to claim 23 or 24 or 25 or 26 or 27 or 28 or 29 or 30 or 31 or 32 or 33, wherein said second colloidal particles are porous colloidal particles.

35. The coating agent according to claim 34, wherein said porous colloidal particles are porous sol particles.

36. The coating agent according to claim 23 or 24 or 25 or 26 or 27 or 28 or 29 or 30 or 31 or 32 or 33 or 34 or 35, wherein said first colloidal particles are formed from colloidal particles having different particle sizes.

37. The coating agent according to claim 23 or 24 or 25 or 26 or 27 or 28 or 29 or 30 or 31 or 32 or 33 or 34 or 35 or 36, wherein said first colloidal particles include at least one of fluorine emulsion particles, acrylic emulsion particles, acrylic silicon emulsion particles, and acrylic urethane emulsion particles.

38. A paint comprising:
said coating agent defined in claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35 or 36 or 37.

39. Amethod formanufacturing a coating agent comprising:
an aqueous dispersion manufacturing step for manufacturing an aqueous dispersion by dispersing photo-semiconductor particles in water; and
a colloidal solution mixing/dispersing step for mixing and dispersing a colloidal solution having colloidal particles into the aqueous dispersion produced in said aqueous dispersion manufacturing step.

40. Amethod formanufacturing a coating agent comprising:
a colloidal solution dispersing step for dispersing a colloidal solution having colloidal particles in water, to thereby manufacture an aqueous dispersion; and
a photo-semiconductor particle mixing/dispersing step for mixing and dispersing photo-semiconductor particles into the aqueous dispersion manufactured in said colloidal solution dispersing step.

41. Themethod formanufacturing a coating agent according to claim 39 or 40, wherein said colloidal particles in said colloidal solution have a particle size which is one time or more the particle size of said photo-semiconductor particle.

42. Themethod for manufacturing a coating agent according to claim 39 or 40 or 41, wherein said photo-semiconductor particles are dispersed such that the content of said photo-semiconductor particles in said entire coating agent assumes a weight ratio of 0.1 to 10%.

43. Amethod formanufacturing a coating agent comprising:
an aqueous dispersion manufacturing step for manufacturing an aqueous dispersion by means of dispersing in water coated photo-semiconductor particles, said particles being formed by coating photo-semiconductor particles with an adsorptive function substance; and
a colloidal solution mixing/dispersing step for mixing and dispersing a colloidal solution having colloidal particles into the aqueous dispersion produced in said aqueous dispersion manufacturing step.

44. Amethod for manufacturing a coating agent comprising:
a colloidal solution dispersing step for dispersing a colloidal solution having colloidal particles in water, to thereby manufacture an aqueous dispersion; and
a coated photo-semiconductor particle mixing/dispersing step for mixing and dispersing coated photo-semiconductor particles, which are formed by coating photo-semiconductor particles with an adsorptive function substance, into the aqueous dispersion manufactured in said colloidal solution dispersing step.

45. The method formanufacturing a coating agent according to claim 43 or 44, wherein said colloidal particles in said colloidal solution have a particle size which is one time or more the particle size of said coated photo-semiconductor particle.

46. The method for manufacturing a coating agent according to claim 43 or 44 or 45, wherein said coated photo-semiconductor particles are dispersed such that the content of said coated photo-semiconductor particles in said entire coating agent assumes a weight ratio of 0.1 to 10%.

47. Themethod formanufacturing a coating agent according to claim 43 or 44 or 45 or 46, wherein said adsorptive function substance is porous calcium phosphate.

48. A method for manufacturing a coating agent, wherein there is manufactured a solution, in which photo-semiconductor particles or coated photo-semiconductor particles formed by coating photo-semiconductor particles with an adsorptive function substance, and a colloidal solution having colloidal particles are dispersed in water.

49. The method for manufacturing a coating agent according to claim 39 or 40 or 41 or 42 or 43 or 44 or 45 or 46 or 47 or 48, wherein said colloidal particles include at least one of fluorine emulsion particles, acrylic emulsion particles, acrylic silicon emulsion particles, and acrylic urethane emulsion particles.

50. Amethod formanufacturing a coating agent comprising:
an aqueous dispersion manufacturing step for manufacturing an aqueous dispersion by dispersing photo-semiconductor particles in water;
a first mixing/dispersing step for mixing and dispersing a first colloidal solution having colloidal particles into the aqueous dispersion produced in said aqueous dispersion manufacturing step, to thereby prepare an aqueous mixture; and
a second mixing/dispersing step for mixing and dispersing a second colloidal solution having colloidal particles, said particles having a particle size equal to or larger than that of said colloidal particles of said first colloidal solution, into the aqueous mixture produced in said first mixing/dispersing step, thereby preparing a coating agent.

51. Amethod formanufacturing a coating agent comprising:
an aqueous dispersion manufacturing step for manufacturing an aqueous dispersion by dispersing photo-semiconductor particles in water;
an aqueous mixture manufacturing step for manufacturing an aqueous mixture, wherein a first colloidal solution having colloidal particles and a second colloidal solution having colloidalparticles, saidparticles having aparticle size equal to or larger than that of said colloidal particles of said first colloidal solution, are dispersed into the aqueous dispersion produced in said aqueous dispersion manufacturing step.

52. The method for manufacturing a coating agent according to claim 50 or 51, wherein said photo-semiconductor particles are dispersed such that the content of said coated photo-semiconductor particles in said entire coating agent assumes a weight ratio of 0.1 to 10%.

53. Amethod for manufacturing a coating agent comprising:
an aqueous dispersion manufacturing step for manufacturing an aqueous dispersion by means of dispersing in water photo-semiconductor particles and coated photo-semiconductor particles, said particles being formed by coating photo-semiconductor particles with an adsorptive function substance;
a first mixing/dispersing step for mixing and dispersing a first colloidal solution having colloidal particles into the aqueous dispersion produced in said aqueous dispersion manufacturing step, to thereby prepare an aqueous mixture; and
a secondmixing/dispersing step for mixing and dispersing a second colloidal solution having colloidal particles, said particles having a particle size equal to or larger than that of said colloidal particles of said first colloidal solution, into the aqueous mixture produced in said first mixing/dispersing step.

54. Amethod for manufacturing a coating agent comprising:
an aqueous dispersion manufacturing step for manufacturing an aqueous dispersion by dispersing in water photo-semiconductor particles and coated semiconductor particles formed by coating photo-semiconductor particles with an adsorptive function substance;
an aqueous mixture manufacturing step for manufacturing an aqueous mixture, in which a first colloidal solution having colloidal particles and a second colloidal solution having colloidal particles, saidparticles having a particle size equal to or larger than that of said colloidal particles of said first colloidal solution, are dispersed into the aqueous dispersion produced in said aqueous dispersion manufacturing step.

55. Themethod formanufacturing a coating agent according to claim 53 or 54, wherein said coated photo-semiconductor particles and said photo-semiconductor particles are dispersed such that a total content of said coated photo-semiconductor particlesandsaid photo-semiconductor particles in said entire coating agent assumes a weight ratio of 0.1 to 10%.

56. The method formanufacturing a coating agent according to claim 50 or 51 or 52 or 53 or 54 or 55, wherein said colloidal particles in said second colloidal solution have a particle size which is one time or more the particle size of said photo-semiconductor particle.

57. The method for manufacturing a coating agent according to claim 50 or 51 or 52 or 53 or 54 or 55 or 56, wherein the particle size of said first colloidal particle is 1 to 1.5 times as large as that of said photo-semiconductor particle.

58. Amethod for manufacturing a coating agent comprising :
an aqueous dispersion manufacturing step for manufacturing an aqueous dispersion by dispersing in water coated photo-semiconductor particles formed by coating photo-semiconductor particles with an adsorptive function substance;
a first mixing/dispersing step for mixing and dispersing a first colloidal solution having colloidal particles into the aqueous dispersion produced in said aqueous dispersion manufacturing step; and
a second mixing/dispersing step for mixing and dispersing a second colloidal solution having colloidal particles, said particles having a particle size equal to or larger than that of said colloidal particles of said first colloidal solution, into the aqueous mixture produced in said first mixing/dispersing step, thereby preparing a coating agent.

59. Amethod for manufacturing a coating agent comprising:
an aqueous dispersion manufacturing step for manufacturing an aqueous dispersion by dispersing in water coated photo-semiconductor particles formed by coating photo-semiconductor particles with an adsorptive function substance;
an aqueous mixture manufacturing step for manufacturing an aqueous mixture, in which a first colloidal solution having colloidal particles and a second colloidal solution having colloidal particles, said particles having a particle size equal to or larger than that of said colloidal particles of said first colloidal solution, are dispersed into the aqueous dispersion produced in said aqueous dispersion manufacturing step.

60. Themethod formanufacturing a coating agent according to claim 58 or 59, wherein said coated photo-semiconductor particles are dispersed in said aqueous dispersion manufacturing step such that the content of said coated photo-semiconductor particles in said entire coating agent assumes a weight ratio of 0.1 to 10%.

61. Themethod formanufacturing a coating agent according to claim 53 or 54 or 55 or 58 or 59 or 60, wherein said colloidal particles in said second colloidal solution have a particle size which is one time or more the particle size of said coated photo-semiconductor particle.

62. Themethod formanufacturing a coating agent according to claim 53 or 54 or 55 or 58 or 59 or 60 or 61, wherein the particle size of said colloidal particles in said first colloidal solution is 1 to 1.5 times as large as that of said coated photo-semiconductor particle.

63. The method for manufacturing a coating agent according to claim 53 or 54 or 55 or 58 or 59 or 60 or 61 or 62, wherein said adsorptive function substance is porous calciumphosphate.

64. The method for manufacturing a coating agent according to claim 50 or 51 or 52 or 53 or 54 or 55 or 56 or 57 or 58 or 59 or 60 or 61or 62 or 63, wherein said colloidal particles in said first colloidal solution are porous colloidal particles.

65. Themethod for manufacturing a coating agent according to claim 64, wherein said colloidal particles in said first colloidal solution are porous sol particles.

66. Themethod for manufacturing a coating agent according to claim 50 or 51 or 52 or 53 or 54 or 55 or 56 or 57 or 58 or 59 or 60 or 61 or 62 or 63 or 64 or 65, wherein said colloidal particles in said second colloidal solution include at least one of fluorine emulsion particles, acrylic emulsion particles, acrylic silicon emulsion particles, and acrylic urethane emulsion particles.
